# EUROPEAN PATENT APPLICATION

(11) **EP 4 723 343 A1**
(43) Date of publication of application: **08.04.2026**
(21) Application number: 24844167.7
(22) Date of filing: 04.01.2024
(51) Int. Cl.: H01M 50/317

(54) **BATTERY CELL, BATTERY AND ELECTRICAL APPARATUS**

(30) Priority: 21.07.2023 CN 202310903836
(71) Applicant: Contemporary Amperex Technology Co., Limited, Ningde, Fujian 352100 (CN)
(72) Inventor: YANG, Kaihuan, Ningde, Fujian 352100 (CN); ZHOU, Wenlin, Ningde, Fujian 352100 (CN); CHENG, Qi, Ningde, Fujian 352100 (CN); KE, Haibo, Ningde, Fujian 352100 (CN); LI, Quankun, Ningde, Fujian 352100 (CN)
(74) Representative: Gong, Jinping
(86) International application number: PCT/CN2024/070660
(87) International publication number: WO 2025/020465

(57) **Abstract**

The present application provides a battery cell, a battery, and an electric apparatus, and pertains to the field of battery technology. The battery cell includes a housing, a pressure relief mechanism, and a first shielding member. The housing has a wall portion, and along a thickness direction of the wall portion, the wall portion has a first surface facing away from an interior of the housing, the first surface is provided with a groove, and a groove bottom surface of the groove is provided with a pressure relief hole. The pressure relief mechanism is disposed in the pressure relief hole, and the pressure relief mechanism is configured to release an internal pressure of the battery cell. The first shielding member is connected to the first surface and covers the groove. With the first shielding member provided on the first surface, and the first shielding member covering the groove, the first shielding member can shield the groove, mitigating the entry of impurities or electrolyte into the groove. This helps reduce the accumulation of impurities or electrolyte in the groove, thereby reducing corrosion of the pressure relief mechanism caused by impurities or electrolyte accumulated in the groove entering the pressure relief hole, and facilitating the improvement of the use reliability and service life of the battery cell.

## Description

### CROSS-REFERENCE TO RELATED APPLICATIONS

The present application claims priority to Chinese Patent Application No. 2023109038361, filed on July 21, 2023 and entitled "BATTERY CELL, BATTERY, AND ELECTRIC APPARATUS," the entire content of which is incorporated herein by reference.

### TECHNICAL FIELD

The present application relates to the field of battery technology, and particularly, to a battery cell, a battery, and an electric apparatus.

### BACKGROUND

In recent years, new energy vehicles have experienced rapid development. In the field of electric vehicles, power batteries, as a power source of electric vehicles, play an indispensable and significant role. With the widespread promotion of new energy vehicles, the demand for power battery products has been increasing. High requirements for both use reliability and service life are imposed on batteries, which are a core component of new energy vehicles.

In battery technology, to enhance the safety of battery cells, a pressure relief mechanism is generally provided on a housing of a battery cell to release internal pressure of the battery cell, so that the pressure relief mechanism can actuate and release the internal pressure of the battery cell when the internal pressure or temperature of the battery cell reaches a threshold. However, the service life and use reliability of pressure relief mechanisms in existing battery cells are relatively poor, resulting in poor use stability of battery cells, which is not conducive to improving the service life and use reliability of the battery cell.

### SUMMARY

An embodiment of the present application provides a battery cell, a battery, and an electric apparatus, capable of effectively improving the use reliability and service life of the battery cell.

According to a first aspect, an embodiment of the present application provides a battery cell, including a housing, a pressure relief mechanism, and a first shielding member. The housing has a wall portion, along a thickness direction of the wall portion, the wall portion has a first surface facing away from an interior of the housing, the first surface is provided with a groove, and a groove bottom surface of the groove is provided with a pressure relief hole. The pressure relief mechanism is disposed in the pressure relief hole, and the pressure relief mechanism is configured to release an internal pressure of the battery cell. The first shielding member is connected to the first surface and covers the groove.

In the above technical solution, by providing the groove on the first surface of the wall portion and disposing the pressure relief hole on the groove bottom surface of the groove, the pressure relief mechanism disposed in the pressure relief hole is a structure recessed away from the first surface, thereby reducing the impact and abrasion of the pressure relief mechanism from the external environment. With the first shielding member provided on the first surface and the first shielding member covering the groove, the first shielding member can shield the groove, mitigating the entry of impurities or electrolyte into the groove. This helps reduce the accumulation of contaminants or electrolyte in the groove, thereby reducing corrosion of the pressure relief mechanism caused by impurities or electrolyte accumulated in the groove entering the pressure relief hole, so as to mitigate premature actuation and pressure relief of the pressure relief mechanism caused by damage, and facilitating the improvement of the service life and use reliability of the pressure relief mechanism, so as to enhance the use reliability and service life of the battery cell.

In some embodiments, the first shielding member or the wall portion is provided with a first exhaust passage, and the first exhaust passage communicates the groove with an exterior of the housing.

In the above technical solution, by providing the first exhaust passage that communicates the groove with the exterior of the housing on the first shielding member or the wall portion, the pressure relief hole is in communication with the exterior of the housing. In addition to making the first shielding member prevent impurities or electrolyte from entering the pressure relief hole, the battery cell of this structure can also facilitate smooth discharge of gas released by the pressure relief mechanism to the exterior of the housing and allow the pressure relief hole to communicate with the exterior of the housing, mitigating the collapse or indentation of the first shielding member during negative pressure testing for airtightness of the battery cell. This helps reduce the risk of damage, impairment, or the like to the first shielding member.

In some embodiments, the first exhaust passage is a first ventilation groove provided on the first surface, the first ventilation groove extends to a groove side surface of the groove, and along the thickness direction of the wall portion, the first shielding member covers only a portion of the first ventilation groove.

In the above technical solution, with the first exhaust passage provided as the first ventilation groove provided on the first surface of the wall portion, and the first ventilation groove penetrating the groove side surface of the groove, the first ventilation groove can communicate the groove with the exterior of the housing, achieving communication between the pressure relief hole and the exterior of the housing. This structure is simple and easy to implement.

In some embodiments, the first surface is provided with an electrolyte injection hole for injecting an electrolyte into the interior of the housing, the electrolyte injection hole and the groove are arranged along a first direction, and the first direction is perpendicular to the thickness direction of the wall portion; where along the first direction, the groove has a first end farthest from the electrolyte injection hole and a second end closest to the electrolyte injection hole, and a distance between the first ventilation groove and the first end is less than a distance between the first ventilation groove and the second end.

In the above technical solution, the first surface of the wall portion is further provided with the electrolyte injection hole, and the electrolyte injection hole and the groove are arranged along the first direction, such that the groove has the first end farthest from the electrolyte injection hole and the second end closest to the electrolyte injection hole along the first direction. By configuring the first ventilation groove such that the distance between it and the first end is less than the distance between it and the second end along the first direction, the first ventilation groove is provided on a side of a midplane of the groove facing away from the electrolyte injection hole along the first direction, allowing the first ventilation groove to be distant from the electrolyte injection hole. In this way, the risk of the electrolyte entering the groove through the first ventilation groove when the electrolyte is injected into the interior of the housing through the electrolyte injection hole.

In some embodiments, an end of the first ventilation groove in its extension direction extends to the groove side surface of the groove, and an area of a cross-section of the first ventilation groove is S₁, satisfying S₁ ≤ 10 mm², where the cross-section of the first ventilation groove is perpendicular to the extension direction of the first ventilation groove.

In the above technical solution, by setting the area of the cross-section of the first ventilation groove to be less than or equal to 10 mm², an overly large ventilation area of the first ventilation groove leads to an excessively large likelihood of the electrolyte entering the groove is mitigated, which helps reduce the risk of the electrolyte entering the groove through the first ventilation groove.

In some embodiments, the area of the cross-section of the first ventilation groove is S₁, satisfying 0.1 mm² ≤ S₁ ≤ 1 mm².

In the above technical solution, by setting the area of the cross-section of the first ventilation groove to be greater than or equal to 0.1 mm², the ventilation effect of the first ventilation groove is enhanced, helping to mitigate the poor ventilation effect of the first ventilation groove. Additionally, further setting the area of the cross-section of the first ventilation groove to be less than or equal to 1 mm² helps to reduce the likelihood of the electrolyte entering the groove, thereby further reducing the risk of the electrolyte entering the groove through the first ventilation groove.

In some embodiments, the groove bottom surface of the groove is provided with a first protrusion protruding therefrom, the first protrusion is arranged around the pressure relief hole, and an annular groove is formed between the first protrusion and the groove side surface of the groove; where the first ventilation groove communicates the annular groove with the exterior of the housing, and along the thickness direction of the wall portion, the first protrusion is spaced apart from the first shielding member.

In the above technical solution, the groove bottom surface of the groove is further provided with the first protrusion protruding therefrom, and the first protrusion is arranged around the pressure relief hole, so that the annular groove is formed between the first protrusion and the groove side surface of the groove. With the first protrusion spaced apart from the first shielding member and with the first ventilation groove communicating the annular groove with the exterior of the housing, the pressure relief hole is a structure that communicates with the exterior of the housing sequentially through a gap between the first protrusion and the first shielding member, the annular groove, and the first ventilation groove. In addition to enabling communication between the pressure relief hole and the exterior of the housing, this can allow the first protrusion to block the electrolyte that has entered the groove, such that electrolyte that has entered the groove through the first ventilation groove can be contained in the annular groove, thereby further reducing the phenomena of the electrolyte entering the pressure relief hole, so as to lower the risk of the electrolyte corroding the pressure relief mechanism.

In some embodiments, the first exhaust passage is a first through-hole provided on the first shielding member, and along the thickness direction of the wall portion, a projection of the first through-hole is located within the groove.

In the above technical solution, with the first exhaust passage provided as the first through-hole provided on the first shielding member and the projection of the first through-hole along the thickness direction of the wall portion being located within the groove, the first through-hole can communicate the groove with the exterior of the housing, achieving communication between the pressure relief hole and the exterior of the housing. This structure is simple and easy to process, facilitating the reduction of manufacturing difficulty for the first exhaust passage.

In some embodiments, along the thickness direction of the wall portion, the projection of the first through-hole does not overlap with a projection of the pressure relief hole.

In the above technical solution, the projection of the first through-hole along the thickness direction of the wall portion is set to not overlap with the projection of the pressure relief hole along the thickness direction of the wall portion, so that the projection of the first through-hole along the thickness direction of the wall portion does not fall within the pressure relief hole, making the first through-hole and the pressure relief hole structures misaligned along the thickness direction of the wall portion. This can mitigate the phenomena of the electrolyte directly entering the pressure relief hole through the first through-hole, allowing the groove bottom surface of the groove to catch the electrolyte entering through the first through-hole, thereby helping to mitigate corrosion of the pressure relief mechanism caused by the electrolyte directly entering the pressure relief hole through the first through-hole.

In some embodiments, the groove bottom surface of the groove is provided with a first protrusion protruding therefrom, the first protrusion is arranged around the pressure relief hole, and an annular groove is formed between the first protrusion and the groove side surface of the groove; where along the thickness direction of the wall portion, the first protrusion is spaced apart from the first shielding member, and the projection of the first through-hole is located within the annular groove.

In the above technical solution, the groove bottom surface of the groove is further provided with the first protrusion protruding therefrom, and the first protrusion is arranged around the pressure relief hole, so that the annular groove is formed between the first protrusion and the groove side surface of the groove. With the first protrusion spaced apart from the first shielding member and the projection of the first through-hole along the thickness direction of the wall portion located within the annular groove, the pressure relief hole is a structure that communicates with the exterior of the housing sequentially through a gap between the first protrusion and the first shielding member, the annular groove, and the first through-hole. In addition to enabling communication between the pressure relief hole and the exterior of the housing, this can allow the first protrusion to block the electrolyte entering the groove, such that the electrolyte entering the groove through the first through-hole can be contained in the annular groove, thereby further reducing the phenomena of the electrolyte entering the pressure relief hole so as to lower the risk of the electrolyte corroding the pressure relief mechanism.

In some embodiments, an area of a cross-section of the first through-hole is S₂, satisfying S₂ ≤ 10 mm².

In the above technical solution, by setting the area of the cross-section of the first through-hole to be less than or equal to 10 mm², an overly large ventilation area of the first through-hole leads to an excessively large likelihood of the electrolyte entering the groove due is mitigated, helping reduce the risk of the electrolyte entering the groove through the first through-hole.

In some embodiments, the area of the cross-section of the first through-hole is S₂, satisfying 0.1 mm² ≤ S₂ ≤ 1 mm².

In the above technical solution, by setting the area of the cross-section of the first through-hole to be greater than or equal to 0.1 mm², the ventilation effect of the first through-hole is enhanced, helping to mitigate the poor ventilation effect of the first through-hole. Additionally, further setting the area of the cross-section of the first through-hole to be less than or equal to 1 mm² helps to further reduce the likelihood of the electrolyte entering the groove, so as to further reduce the risk of the electrolyte entering the groove through the first through-hole.

In some embodiments, the groove bottom surface of the groove is provided with a first protrusion protruding therefrom, the first protrusion is arranged around the pressure relief hole, and an annular groove is formed between the first protrusion and the groove side surface of the groove.

In the above technical solution, with the first protrusion provided protruding from the groove bottom surface of the groove and the first protrusion arranged around the pressure relief hole, the annular groove is formed between the first protrusion and the groove side surface of the groove, so that the first protrusion can block electrolyte or impurities entering the groove to some degree. This allows the electrolyte or impurities to be contained in the annular groove, thereby mitigating the phenomena of the electrolyte or impurities that have entered the groove further entering the pressure relief hole, so as to reduce the risk of corrosion of the pressure relief mechanism by electrolyte or impurities, and helping to further mitigate premature actuation and pressure relief of the pressure relief mechanism caused by damage, so as to enhance the use reliability and service life of the battery cell.

In some embodiments, the battery cell further includes a second shielding member; where along the thickness direction of the wall portion, the second shielding member is connected to the first protrusion, and the second shielding member covers the pressure relief hole.

In the above technical solution, the battery cell is further provided with the second shielding member, and the second shielding member is connected to the first protrusion and covers the pressure relief hole, so that the second shielding member can further shield the pressure relief hole to some degree, further mitigating the entry of impurities or electrolyte into the groove, reducing corrosion of the pressure relief mechanism caused by impurities or electrolyte entering the pressure relief hole, mitigating premature actuation and pressure relief of the pressure relief mechanism caused by damage, and facilitating the improvement of the service life and use reliability of the pressure relief mechanism, so as to enhance the use reliability and service life of the battery cell.

In some embodiments, along the thickness direction of the wall portion, the second shielding member is connected to an end of the first protrusion facing away from the groove bottom surface of the groove.

In the above technical solution, the second shielding member is provided connected to the end of the first protrusion facing away from the groove bottom surface of the groove, that is, the second shielding member is connected to the end of the first protrusion facing the first shielding member. The battery cell of this structure facilitates the assembly of the second shielding member onto the first protrusion, helps to reduce the difficulty of connecting the second shielding member to the first protrusion, and facilitates the coverage of the pressure relief hole by the second shielding member.

In some embodiments, along the thickness direction of the wall portion, the first shielding member is spaced apart from the second shielding member; where the first shielding member or the wall portion is provided with a first exhaust passage, the second shielding member or the first protrusion is provided with a second exhaust passage, the first exhaust passage communicates the second exhaust passage with the exterior of the housing, and the second exhaust passage communicates the first exhaust passage with the pressure relief hole.

In the above technical solution, by providing the first exhaust passage on the first shielding member or the wall portion and the second exhaust passage on the second shielding member or the first protrusion, the pressure relief hole, the second exhaust passage, the first exhaust passage, and the exterior of the housing are sequentially communicated. In addition to making the first shielding member and the second shielding member prevent impurities or electrolyte from entering the pressure relief hole, the battery cell of this structure can also facilitate the smooth discharge of gas released by the pressure relief mechanism to the exterior of the housing and allow the pressure relief hole to communicate with the exterior of the housing, mitigating the collapse or indentation of the first shielding member and the second shielding member during negative pressure testing for airtightness of the battery cell. This helps reduce the risk of damage, impairment, or the like to the first shielding member and the second shielding member.

In some embodiments, along the thickness direction of the wall portion, a distance between the first shielding member and the second shielding member is D₁, and a thickness of the second shielding member is D₂, satisfying D₂ ≤ D₁ ≤ 8 D₂.

In the above technical solution, by setting the distance between the first shielding member and the second shielding member along the thickness direction of the wall portion to be greater than or equal to the thickness of the second shielding member, sufficient space is provided between the first shielding member and the second shielding member for gas flow, and interference between the first shielding member and the second shielding member can be reduced. Additionally, by setting the distance between the first shielding member and the second shielding member along the thickness direction of the wall portion to be less than or equal to eight times the thickness of the second shielding member, excessive space occupation by the first shielding member and the second shielding member can be mitigated, facilitating the optimization of the volume of the battery cell to enhance the energy density of the battery cell.

In some embodiments, along the thickness direction of the wall portion, a distance between the first shielding member and the second shielding member is D₁, satisfying 0.1 mm ≤ D₁ ≤ 1 mm.

In the above technical solution, by setting the distance between the first shielding member and the second shielding member along the thickness direction of the wall portion to be greater than or equal to 0.1 mm, sufficient space is provided between the first shielding member and the second shielding member for gas flow, and interference between the first shielding member and the second shielding member can be reduced. Additionally, by setting the distance between the first shielding member and the second shielding member along the thickness direction of the wall portion to be less than or equal to 1 mm, excessive space occupation by the first shielding member and the second shielding member can be mitigated, facilitating the optimization of the volume of the battery cell to enhance the energy density of the battery cell.

In some embodiments, the second exhaust passage is a second ventilation groove provided on the first protrusion, and along a radial direction of the pressure relief hole, the second ventilation groove extends through two sides of the first protrusion; or the second exhaust passage is a second through-hole provided on the second shielding member, and a projection of the second through-hole along the thickness direction of the wall portion is located within the pressure relief hole.

In the above technical solution, with the second exhaust passage provided as the second ventilation groove provided on the first protrusion and the second ventilation groove extending through two sides of the first protrusion along the radial direction of the pressure relief hole, the second ventilation groove communicates the pressure relief hole with the annular groove, enabling communication between the pressure relief hole and the first exhaust passage. This structure is simple and easy to implement. Similarly, the second exhaust passage can also be provided as the second through-hole provided on the second shielding member, and the projection of the second through-hole along the thickness direction of the wall portion is located within the pressure relief hole, enabling communication between the pressure relief hole and the first exhaust passage. This structure is simple and easy to process, facilitating the reduction of manufacturing difficulty for the second exhaust passage.

In some embodiments, the first exhaust passage is a first through-hole provided on the first shielding member, and the second exhaust passage is a second through-hole provided on the second shielding member; and along the thickness direction of the wall portion, a projection of the first through-hole is located within the groove, a projection of the second through-hole is located within the pressure relief hole, and the projection of the first through-hole and the projection of the second through-hole do not overlap.

In the above technical solution, the first exhaust passage and the second exhaust passage are respectively provided as the first through-hole provided on the first shielding member and the second through-hole provided on the second shielding member, and the projections of the first through-hole and the second through-hole along the thickness direction of the wall portion are set to not overlap, so that the first through-hole and the second through-hole are structures misaligned along the thickness direction of the wall portion. This can effectively mitigate the phenomena of the electrolyte directly entering the second through-hole after entering the first through-hole, reducing the risk of the electrolyte sequentially passing through the first through-hole and the second through-hole to enter the pressure relief hole and corrode the pressure relief mechanism.

In some embodiments, a projection of an edge of the second shielding member along the thickness direction of the wall portion is located within the annular groove.

In the above technical solution, with the projection of the edge of the second shielding member along the thickness direction of the wall portion set to be located within the annular groove, the second shielding member is a structure that covers the first protrusion along the thickness direction of the wall portion, facilitating the connection of the second shielding member to the first protrusion, helping to enhance the structural stability of connecting the second shielding member to the first protrusion, and improving the effect of the second shielding member shielding the pressure relief hole.

In some embodiments, along the thickness direction of the wall portion, the first protrusion does not extend beyond the first surface.

In the above technical solution, with the first protrusion set to not extend beyond the first surface along the thickness direction of the wall portion, the first protrusion is a structure entirely located within the groove, effectively reducing interference of the first protrusion with the first shielding member, facilitating the reduction of assembly difficulty for connecting the first shielding member to the first surface, and mitigating local protrusions of the first shielding member.

In some embodiments, along the thickness direction of the wall portion, the pressure relief hole includes a first hole segment closest to the groove, and a wall surface of the first hole segment is connected to and flush with an inner peripheral surface of the first protrusion.

In the above technical solution, the pressure relief hole has the first hole segment closest to the groove along the thickness direction of the wall portion, and the wall surface of the first hole segment is arranged to be connected to and flush with the inner peripheral surface of the first protrusion, facilitating the reduction of forming difficulty for the first protrusion and the first hole segment, so as to enhance the production efficiency of the battery cell.

In some embodiments, the pressure relief hole further includes a second hole segment, and along the thickness direction of the wall portion, the second hole segment is located on a side of the first hole segment facing away from the groove; where a hole diameter of the first hole segment is smaller than a hole diameter of the second hole segment, and the pressure relief mechanism is disposed in the second hole segment and covers the first hole segment; or the hole diameter of the first hole segment is larger than the hole diameter of the second hole segment, and the pressure relief mechanism is disposed in the first hole segment and covers the second hole segment.

In the above technical solution, the pressure relief hole further has the second hole segment, and the hole diameter of the second hole segment differs from the hole diameter of the first hole segment, so that the pressure relief hole is a stepped hole structure. If the hole diameter of the first hole segment is smaller than the hole diameter of the second hole segment, the pressure relief mechanism is disposed in the second hole segment and covers the first hole segment. If the hole diameter of the first hole segment is larger than the hole diameter of the second hole segment, the pressure relief mechanism is disposed in the first hole segment and covers the second hole segment. The battery cell of this structure can provide positioning and limiting functions for the pressure relief mechanism to some degree, helping to enhance structural stability of disposing the pressure relief mechanism in the pressure relief hole, and improving the sealing effect of the pressure relief mechanism for the pressure relief hole.

In some embodiments, along the thickness direction of the wall portion, a second protrusion is formed on a side of the wall portion facing away from the first surface and at a position corresponding to the groove.

In the above technical solution, with the second protrusion formed on the side of the wall portion facing away from the first surface and at the position corresponding to the groove, the groove of the wall portion is a concave-convex structure that can be formed by stamping, so as to form the groove and the second protrusion on two sides of the wall portion, respectively. The wall portion of this structure is easy to manufacture and facilitates the reduction of processing difficulty for the groove, enhancing the processing efficiency of the groove.

In some embodiments, the housing includes a housing body and an end cap. An accommodation cavity with an opening is formed in an interior of the housing body, and the accommodation cavity is configured to accommodate an electrode assembly. The end cap seals the opening. The end cap is the wall portion; or the housing body includes the wall portion.

In the above technical solution, the wall portion may be the end cap of the housing or a part of the housing body of the housing. With the wall portion of the housing provided as the end cap of the housing configured to seal the opening of the housing body, the battery cell of this structure facilitates the provision of the groove and the pressure relief hole on the end cap and the installation of the pressure relief mechanism in the pressure relief hole, helping to reduce the manufacturing difficulty of the battery cell and enhancing the production efficiency of the battery cell. Similarly, with the wall portion of the housing provided as one wall of the housing body, the battery cell of this structure can reduce the impact of stress generated by the connection between the end cap and the housing body on the pressure relief mechanism, mitigating damage and the like to the pressure relief mechanism, thereby reducing the risk of premature actuation and pressure relief of the pressure relief mechanism, and helping to enhance the use reliability and service life of the battery cell.

According to a second aspect, an embodiment of the present application further provides a battery, including the battery cell described above.

According to a third aspect, an embodiment of the present application further provides an electric apparatus, including the battery cell described above, where the battery cell is configured to provide electric energy.

### BRIEF DESCRIPTION OF DRAWINGS

To more clearly illustrate the technical solutions of the embodiments of the present application, the drawings required for use in the embodiments are briefly introduced below. It should be understood that the following drawings only show certain embodiments of the present application and therefore should not be considered as limiting the scope. For those of ordinary skill in the art, other related drawings can be obtained based on these drawings without creative effort.
FIG. 1 is a schematic structural diagram of a vehicle provided by some embodiments of the present application.
FIG. 2 is an exploded structural diagram of a battery provided by some embodiments of the present application.
FIG. 3 is a schematic structural diagram of a battery cell provided by some embodiments of the present application.
FIG. 4 is an exploded structural diagram of a battery cell provided by some embodiments of the present application.
FIG. 5 is a partial schematic structural diagram of a battery cell provided by some embodiments of the present application.
FIG. 6 is a partial cross-sectional view of a battery cell provided by some embodiments of the present application.
FIG. 7 is a top view of a battery cell (with the first shielding member removed) provided by some embodiments of the present application.
FIG. 8 is a partial schematic structural diagram of a battery cell provided by some other embodiments of the present application.
FIG. 9 is a partial cross-sectional view of a battery cell provided by some other embodiments of the present application.
FIG. 10 is a partial schematic structural diagram of a battery cell provided by some further embodiments of the present application.
FIG. 11 is a partial cross-sectional view of a battery cell provided by some further embodiments of the present application.
FIG. 12 is a partial schematic structural diagram of a battery cell provided by some additional embodiments of the present application.
FIG. 13 is a partial cross-sectional view of a battery cell provided by some additional embodiments of the present application.
FIG. 14 is a partial schematic structural diagram of a battery cell provided by some yet further embodiments of the present application.
FIG. 15 is a partial cross-sectional view of a battery cell provided by some yet further embodiments of the present application.

Reference signs: 1000-vehicle; 100-battery; 10-box; 11-first box body; 12-second box body; 20-battery cell; 21-housing; 211-wall portion; 2111-first surface; 2112-groove; 2112a-first end; 2112b-second end; 2112c-midplane of groove; 2113-pressure relief hole; 2113a-first hole segment; 2113b-second hole segment; 2114-first ventilation groove; 2115-electrolyte injection hole; 2116-first protrusion; 2116a-second ventilation groove; 2117-annular groove; 2118-second protrusion; 212-housing body; 2121-opening; 213-end cap; 22-pressure relief mechanism; 23-first shielding member; 231-first through-hole; 24-electrode assembly; 241-tab; 25-electrode terminal; 26-insulator; 27-first exhaust passage; 28-second shielding member; 281-second through-hole; 29-second exhaust passage; 200-controller; 300-motor; X-thickness direction of wall portion; and Y-first direction.

### DESCRIPTION OF EMBODIMENTS

To make the objectives, technical solutions, and advantages of the embodiments of the present application clearer, the technical solutions in the embodiments of the present application are clearly described below in conjunction with the drawings in the embodiments of the present application. Obviously, the described embodiments are a part of the embodiments of the present application, not all embodiments. Based on the embodiments in the present application, all other embodiments obtained by those of ordinary skill in the art without creative effort fall within the scope of protection of the present application.

Unless otherwise defined, all technical and scientific terms used in the present application have the same meaning as commonly understood by those skilled in the technical field of the present application. The terms used in the specification of the present application are only for the purpose of describing specific embodiments and are not intended to limit the present application. The terms "include" and "have" in the specification, claims, and the above description of the drawings of the present application, as well as any variations thereof, are intended to cover non-exclusive inclusion. The terms "first," "second," and the like in the specification, claims, or the above description of the drawings of the present application are used to distinguish different objects, not to describe a specific order or primary-secondary relationship.

Reference to "embodiment" in the present application means that a specific feature, structure, or characteristic described in connection with the embodiment may be included in at least one embodiment of the present application. The appearance of this phrase in various places in the specification does not necessarily refer to the same embodiment, nor is it a separate or alternative embodiment mutually exclusive with other embodiments.

In the description of the present application, it should be noted that, unless otherwise explicitly specified and limited, the terms "install," "interconnect," "connect," and "attach" should be understood broadly. For example, it may be a fixed connection, a detachable connection, or an integral connection; and it may be a direct connection, an indirect connection through an intermediate medium, or an internal communication between two elements. For those of ordinary skill in the art, the specific meanings of the above terms in the present application can be understood according to specific circumstances.

The term "and/or" in the present application is merely an association relationship describing associated objects, indicating that three relationships may exist. For example, A and/or B may indicate: A alone, both A and B, and B alone. In addition, the character "/" in the present application generally indicates an "or" relationship between the associated objects before and after.

In the embodiments of the present application, the same reference signs denote the same components, and for brevity, detailed descriptions of the same components are omitted in different embodiments. It should be understood that the dimensions such as thickness, length, and width of various components in the embodiments of the present application shown in the drawings, as well as the overall thickness, length, and width of integrated devices, are merely illustrative and should not constitute any limitation to the present application.

The term "multiple" appearing in the present application refers to two or more (including two).

In the embodiments of the present application, the battery cell may be a secondary battery, and the secondary battery refers to a battery cell that can be recharged to activate an active material for continued use after the battery cell is discharged.

The battery cell may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, or the like, and the embodiments of the present application are not limited thereto.

The battery cell generally includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is disposed between the positive electrode and the negative electrode, preventing short-circuiting between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite in its thickness direction, and the positive electrode active material is disposed on either or both of the two opposite surfaces of the positive electrode current collector.

As an example, the positive electrode current collector may be a metal foil or a composite current collector. For instance, as a metal foil, it may be silver-plated aluminum, silver-plated stainless steel, stainless steel, copper, aluminum, nickel, carbon electrode, carbon, nickel, or titanium. The composite current collector may include a polymer material base layer and a metal layer. The composite current collector may be formed by forming a metal material (for example, aluminum, aluminum alloy, nickel, nickel alloy, titanium, titanium alloy, silver, and silver alloy) on a polymer material substrate (for example, a substrate of polypropylene, polyethylene terephthalate, polybutylene terephthalate, polystyrene, polyethylene, or the like).

As an example, the positive electrode active material may include at least one of the following materials: lithium-containing phosphates, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂ or LiMn2O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0..2}Mn_{0.2}O₂ (NCM₆₂₂ for short), LiNi_{0.8}Co_{0.1}Mn_{0.}O₂ (NCM₈₁₁ for short)), lithium nickel cobalt aluminum oxide (for example, LiNi_{0.85}Co_{0.15}Al_{0.05}O₂), and their modified compounds.

In some embodiments, the positive electrode may be a foam metal. The foam metal may be foam nickel, foam copper, foam aluminum, foam alloy, or foam carbon. When foam metal is used as the positive electrode, the surface of the foam metal may not be provided with a positive electrode active material, or it may be provided with a positive electrode active material. As an example, the foam metal may also be filled and/or deposited with a lithium source material, potassium metal, or sodium metal, where the lithium source material is lithium metal and/or a lithium-rich material.

In some embodiments, the negative electrode may be a negative electrode plate, and the negative electrode plate may include a negative electrode current collector.

As an example, the negative electrode current collector may be a metal foil, foam metal, or composite current collector. For instance, as a metal foil, it may be silver-plated aluminum or stainless steel, stainless steel, copper, aluminum, nickel, carbon electrode, carbon, nickel, or titanium. The foam metal may be foam nickel, foam copper, foam aluminum, foam alloy, or foam carbon. The composite current collector may include a polymer material base layer and a metal layer. The composite current collector may be formed by forming a metal material (for example, copper, copper alloy, nickel, nickel alloy, titanium, titanium alloy, silver, and silver alloy) on a polymer material substrate (for example, a substrate of polypropylene, polyethylene terephthalate, polybutylene terephthalate, polystyrene, polyethylene, or the like).

As an example, the negative electrode plate may include a negative electrode current collector and a negative electrode active material disposed on at least one surface of the negative electrode current collector.

As an example, the negative electrode current collector has two surfaces opposite in its thickness direction, and the negative electrode active material is disposed on either or both of the two opposite surfaces of the negative electrode current collector.

As an example, the negative electrode active material may be a known negative electrode active material for battery cells. As an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon oxide compounds, silicon-carbon composites, silicon-nitrogen composites, and silicon alloys. The tin-based material may be selected from at least one of elemental tin, tin oxide compounds, and tin alloys. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator, and the separator is disposed between the positive electrode and the negative electrode.

In some embodiments, the separator is a separator membrane. The type of separator membrane may vary, and any well-known porous structure separator membrane with good chemical and mechanical stability may be selected.

As an example, the material of the separator membrane may include at least one of glass fiber, non-woven fabric, polyethylene, polypropylene, and polyvinylidene fluoride. The separator membrane may be a single-layer film or a multi-layer composite film. When the separator membrane is a multi-layer composite film, the materials of each layer may be the same or different. The separator may be a separate component located between the positive and negative electrodes or may be attached to the surfaces of the positive and negative electrodes.

In some embodiments, the separator is a solid-state electrolyte. The solid-state electrolyte is disposed between the positive electrode and the negative electrode, serving both to conduct ions and to isolate the positive and negative electrodes.

In some embodiments, the battery cell further includes an electrolyte, and the electrolyte serves to conduct ions between the positive and negative electrodes. The electrolyte may be liquid, gel, or solid. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro-bis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as the skeleton network of the electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of oxide solid electrolytes (crystalline perovskite, sodium superionic conductor, garnet, amorphous LiPON thin film), sulfide solid electrolytes (crystalline lithium superionic conductor (lithium germanium phosphorus sulfide, argyrodite), amorphous sulfide), halide solid electrolytes, nitride solid electrolytes, and hydride solid electrolytes.

As an example, the composite solid-state electrolyte is formed by adding inorganic solid-state electrolyte fillers to a polymer solid-state electrolyte.

In some embodiments, the electrode assembly is a wound structure. The positive electrode plate and the negative electrode plate are wound into a wound structure.

In some embodiments, the electrode assembly is a laminated structure.

As an example, multiple positive electrode plates and multiple negative electrode plates may be provided, respectively, and the multiple positive electrode plates and multiple negative electrode plates are alternately stacked.

As an example, multiple positive electrode plates may be provided, and the negative electrode plate is folded to form multiple stacked folding segments, with one positive electrode plate sandwiched between adjacent folding segments.

As an example, both the positive electrode plate and the negative electrode plate are folded to form multiple stacked folding segments.

As an example, multiple separators may be provided, respectively disposed between any adjacent positive electrode plates or negative electrode plates.

As an example, the separator may be continuously disposed, set between any adjacent positive electrode plates or negative electrode plates by folding or winding.

In some embodiments, the shape of the electrode assembly may be cylindrical, flat, or prismatic, or the like.

In some embodiments, the electrode assembly is provided with tabs, and the tabs can conduct current from the electrode assembly. The tabs include a positive tab and a negative tab.

In some embodiments, the battery cell may include a housing. The housing is configured to package components such as the electrode assembly and the electrolyte. The housing may be a steel housing, aluminum housing, plastic housing (for example, polypropylene), composite metal housing (for example, copper-aluminum composite housing), aluminum-plastic film, or the like.

As an example, the battery cell may be a cylindrical battery cell, a prismatic battery cell, a pouch battery cell, or a battery cell of other shapes. Prismatic battery cells include, but are not limited to, square-shell battery cells, blade-shaped battery cells, and multi-prismatic batteries. The multi-prismatic batteries are such as hexagonal prismatic batteries.

The battery mentioned in the embodiments of the present application refers to a single physical module including one or more battery cells to provide higher voltage and capacity.

In some embodiments, the battery may be a battery module. When there are multiple battery cells, the multiple battery cells are arranged and fixed to form a battery module.

In some embodiments, the battery may be a battery pack, and the battery pack includes a box and battery cells, with the battery cells or battery modules accommodated in the box.

In some embodiments, the box may be part of the chassis structure of a vehicle. For example, a part of the box may form at least a portion of the floor of the vehicle, or a part of the box may form at least a portion of the crossbeams and longitudinal beams of the vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide adaptability, and low self-discharge coefficient, making it an important component of new energy development today. The development of battery technology must consider multiple design factors simultaneously, such as energy density, cycle life, discharge capacity, charge-discharge rate, and other performance parameters, as well as the safety of the battery.

In battery technology, for general battery cells, to enhance the safety of a battery cell, a pressure relief mechanism is typically provided on a housing of the battery cell to release an internal pressure of the battery cell through the pressure relief mechanism, thereby effectively improving the safety of the battery cell. In the related art, the housing is typically provided with a pressure relief hole communicating an interior and exterior of the housing, and the pressure relief mechanism is disposed in the pressure relief hole and seals the pressure relief hole, allowing the pressure relief mechanism to actuate and open when the internal pressure or temperature of the battery cell reaches a threshold to release the internal pressure of the battery cell. To reduce the impact of the external environment on the pressure relief mechanism during use, a groove is provided on an outer surface of the housing, and the pressure relief hole is disposed on a groove bottom surface of the groove, enabling the pressure relief mechanism to be a recessed structure through the groove to reduce the impact from the external environment during the use of the pressure relief mechanism. However, in a battery cell of such structure, substances such as impurities or electrolyte from the external environment easily enter the groove, making the groove prone to retaining electrolyte or even dirt, which can lead to corrosion of the pressure relief mechanism by the electrolyte or dirt in the groove entering the pressure relief hole. This causes damage or premature valve opening of the pressure relief mechanism, resulting in a shorter service life and lower use reliability of the pressure relief mechanism, and thus poor use stability of the battery cell, which is not conducive to improving the service life and use reliability of the battery cell.

Based on the above considerations, to address the issues of short service life and low use reliability of battery cells, the embodiments of the present application provide a battery cell, where the battery cell includes a housing, a pressure relief mechanism, and a first shielding member. The housing has a wall portion, along a thickness direction of the wall portion, the wall portion has a first surface facing away from an interior of the housing, the first surface is provided with a groove, and a groove bottom surface of the groove is provided with a pressure relief hole. The pressure relief mechanism is disposed in the pressure relief hole, and the pressure relief mechanism is configured to release an internal pressure of the battery cell. The first shielding member is connected to the first surface and covers the groove.

In battery cell of such a structure, by providing the groove on the first surface of the wall portion and disposing the pressure relief hole on the groove bottom surface of the groove, the pressure relief mechanism disposed in the pressure relief hole is a structure recessed away from the first surface, thereby reducing the impact and abrasion of the pressure relief mechanism from the external environment. With the first shielding member provided on the first surface and the first shielding member covering the groove, the first shielding member can shield the groove, mitigating the entry of impurities or electrolyte into the groove. This helps reduce the accumulation of contaminants or electrolyte in the groove, thereby reducing corrosion of the pressure relief mechanism caused by impurities or electrolyte accumulated in the groove entering the pressure relief hole, so as to mitigate premature actuation and pressure relief of the pressure relief mechanism caused by damage, and facilitating the improvement of the service life and use reliability of the pressure relief mechanism, so as to enhance the use reliability and service life of the battery cell.

The battery cell disclosed in the embodiments of the present application can be used, but is not limited to, in electric apparatuses such as vehicles, ships, or aircraft. A power supply system for such an electric apparatus can be composed of the battery cell, battery, or the like disclosed in the present application, which helps mitigate damage or premature valve opening of the pressure relief mechanism during use, thereby improving the service life and use reliability of the battery cell.

Embodiments of the present application provide an electric apparatus using a battery as a power source, where the electric apparatus may include, but is not limited to, a mobile phone, tablet, laptop, electric toy, electric tool, electric bicycle, electric vehicle, ship, spacecraft, or the like. The electric toy may include fixed or mobile electric toys, such as game consoles, electric car toys, electric ship toys, and electric airplane toys, or the like. The spacecraft may include airplanes, rockets, space shuttles, and spaceships, or the like.

For convenience of explanation, the following embodiments take an electric apparatus as a vehicle as an example for description in an embodiment of the present application.

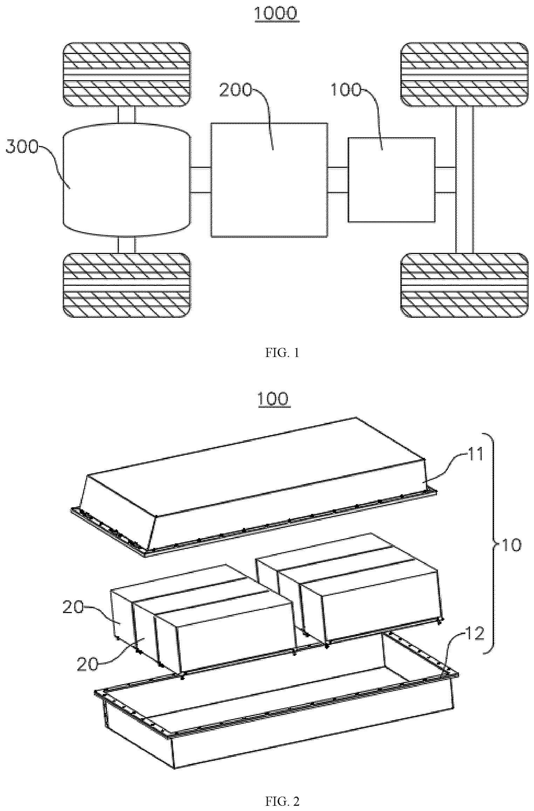

Referring to FIG. 1, FIG. 1 is a schematic structural diagram of a vehicle 1000 provided by some embodiments of the present application. The vehicle 1000 may be a fuel vehicle, a gas vehicle, or a new energy vehicle, and the new energy vehicle may be a pure electric vehicle, a hybrid vehicle, or an extended-range vehicle, or the like. A battery 100 is disposed inside the vehicle 1000, and the battery 100 may be disposed at the bottom, front, or rear of the vehicle 1000. The battery 100 may be used to supply power to the vehicle 1000, for example, the battery 100 may serve as an operational power source for the vehicle 1000. The vehicle 1000 may further include a controller 200 and a motor 300, where the controller 200 is used to control the battery 100 to supply power to the motor 300, for example, for the operational power requirements during starting, navigation, and driving of the vehicle 1000.

In some embodiments of the present application, the battery 100 may not only serve as an operational power source for the vehicle 1000 but also as a driving power source for the vehicle 1000, replacing or partially replacing fuel or natural gas to provide driving power for the vehicle 1000.

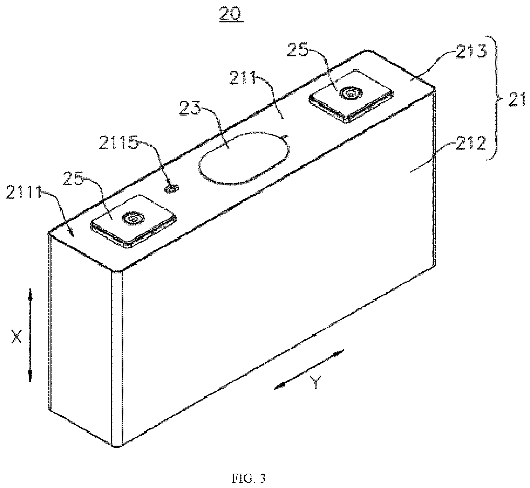

Referring to FIG. 2 and FIG. 3, FIG. 2 is an exploded structural diagram of a battery 100 provided by some embodiments of the present application, and FIG. 3 is a schematic structural diagram of a battery cell 20 provided by some embodiments of the present application. The battery 100 may include a box 10 and a battery cell 20, where the battery cell 20 is accommodated in the box 10.

The box 10 is used to provide an assembly space for the battery cell 20, and the box 10 may adopt various structures. In some embodiments, the box 10 may include a first box body 11 and a second box body 12, where the first box body 11 and the second box body 12 cover each other, and the first box body 11 and the second box body 12 jointly define an assembly space for accommodating the battery cell 20. The second box body 12 may be a hollow structure with one end open, and the first box body 11 may be a plate-like structure, where the first box body 11 covers the open side of the second box body 12, so that the first box body 11 and the second box body 12 jointly define the assembly space. Alternatively, both the first box body 11 and the second box body 12 may be hollow structures with one side open, and the open side of the first box body 11 covers the open side of the second box body 12. Certainly, the box 10 formed by the first box body 11 and the second box body 12 may have various shapes, such as a cylinder or a cuboid, or the like. Illustratively, in FIG. 2, the box 10 is a cuboid structure.

Optionally, in the battery 100, there may be one or multiple battery cells 20 accommodated in the box 10. When there are multiple battery cells 20 accommodated in the box 10, the multiple battery cells 20 may be connected in series, in parallel, or in a mixed connection, where a mixed connection refers to a combination of both series and parallel connections among the multiple battery cells 20. The multiple battery cells 20 may be directly connected in series, in parallel, or in a mixed connection, and the entire module formed by the multiple battery cells 20 is accommodated in the box 10. Certainly, in some embodiments, the battery 100 may also be formed by first connecting multiple battery cells 20 in series, in parallel, or in a mixed connection to form a battery module, and then connecting multiple battery modules in series, in parallel, or in a mixed connection to form a whole, which is accommodated in the box 10.

In some embodiments, the battery 100 may further include other structures, for example, the battery 100 may further include a busbar component, where the busbar component connects multiple battery cells 20 to achieve electrical connection between the multiple battery cells 20.

Each battery cell 20 may be a secondary battery or a primary battery and may also be a lithium-sulfur battery, a sodium-ion battery, or a magnesium-ion battery, but is not limited thereto. The battery cell 20 may be cylindrical, flat, cuboid, or other shapes, or the like. Illustratively, in FIG. 3, the battery cell 20 is a cuboid structure.

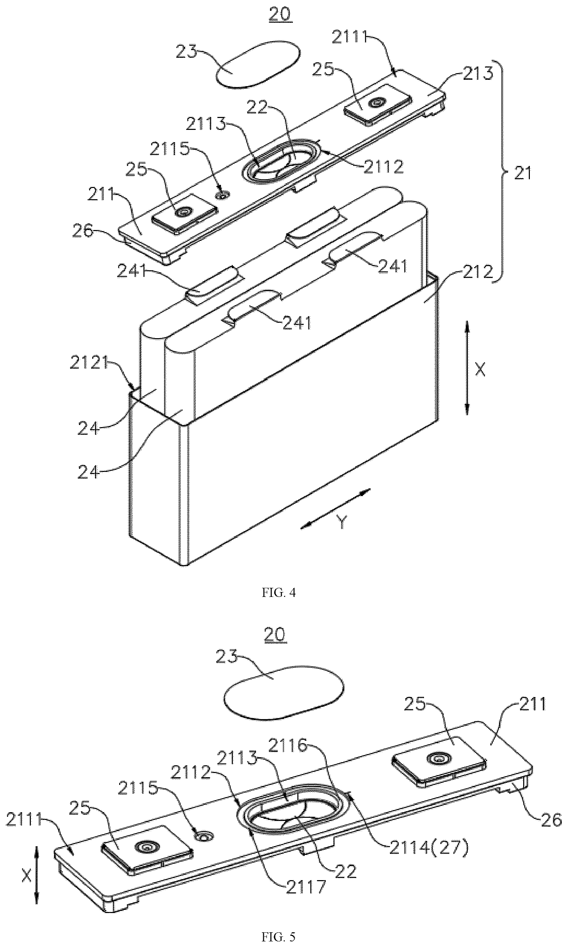

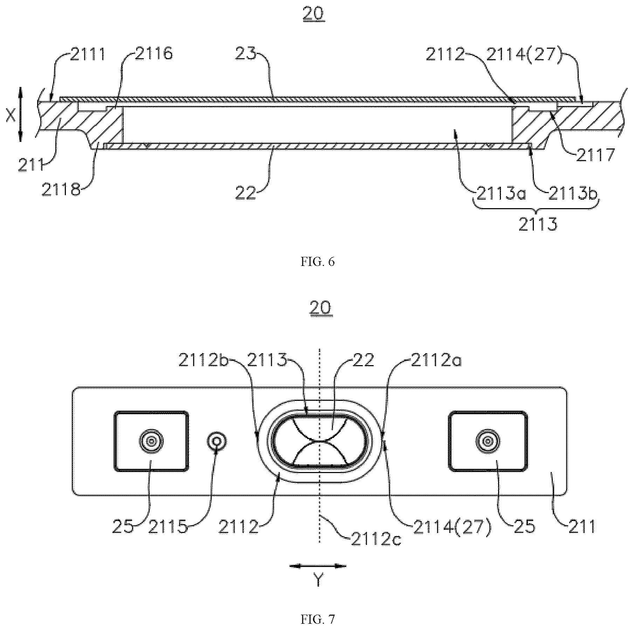

According to some embodiments of the present application, referring to FIG. 3, and further referring to FIG. 4, FIG. 5, and FIG. 6, FIG. 4 is an exploded structural diagram of a battery cell 20 provided by some embodiments of the present application, FIG. 5 is a partial schematic structural diagram of a battery cell 20 provided by some embodiments of the present application, and FIG. 6 is a partial cross-sectional view of a battery cell 20 provided by some embodiments of the present application. The present application provides a battery cell 20, where the battery cell 20 includes a housing 21, a pressure relief mechanism 22, and a first shielding member 23. The housing 21 has a wall portion 211, along a thickness direction X of the wall portion, the wall portion 211 has a first surface 2111 facing away from an interior of the housing 21, the first surface 2111 is provided with a groove 2112, and a groove bottom surface of the groove 2112 is provided with a pressure relief hole 2113. The pressure relief mechanism 22 is disposed in the pressure relief hole 2113, and the pressure relief mechanism 22 is configured to release an internal pressure of the battery cell 20. The first shielding member 23 is connected to the first surface 2111 and covers the groove 2112.

In some embodiments, the battery cell 20 may further include an electrode assembly 24, where the electrode assembly 24 is accommodated in the housing 21, and the electrode assembly 24 is the component in the battery cell 20 where electrochemical reactions occur. The structure of the electrode assembly 24 may vary, for example, the electrode assembly 24 may be a wound structure formed by winding a positive electrode plate, a separator, and a negative electrode plate, or a laminated structure formed by stacking a positive electrode plate, a separator, and a negative electrode plate.

Illustratively, the separator is a separator membrane, and the main material of the separator membrane may be selected from at least one of glass fiber, non-woven fabric, polyethylene, polypropylene, and polyvinylidene fluoride.

Optionally, there may be one or multiple electrode assemblies 24 accommodated in the housing 21. Illustratively, in FIG. 4, the housing 21 of the battery cell 20 is provided with two electrode assemblies 24, and the two electrode assemblies 24 are stacked along their thickness direction, that is, the two electrode assemblies 24 are stacked along the thickness direction of the battery cell 20. Certainly, in other embodiments, the number of electrode assemblies 24 accommodated in the housing 21 may also be one, three, four, five, six, seven, or eight, or the like.

The housing 21 may also be used to accommodate an electrolyte, such as an electrolytic solution. The housing 21 may have various structural forms, such as a cylinder or a cuboid, or the like. Similarly, the material of the housing 21 may also vary, such as copper, iron, aluminum, steel, or aluminum alloy, or the like.

In some embodiments, as shown in FIG. 3 and FIG. 4, the housing 21 may include a housing body 212 and an end cap 213, where an accommodation cavity is formed in an interior of the housing body 212, the accommodation cavity is used to accommodate the electrode assembly 24, and the accommodation cavity has an opening 2121, that is, the housing body 212 is a hollow structure with one end open at the opening 2121, and the end cap 213 covers the opening 2121 of the housing body 212 and forms a sealed connection to form a sealed space for accommodating the electrode assembly 24 and the electrolyte.

It should be noted that the wall portion 211 used to provide the groove 2112 and the pressure relief hole 2113 may be the end cap 213 of the housing 21 or one wall of the housing body 212 of the housing 21. Illustratively, in FIG. 3 and FIG. 4, the wall portion 211 is the end cap 213. Certainly, the structure of the battery cell 20 is not limited to this, and in other embodiments, the wall portion 211 may also be the bottom wall of the housing body 212 opposite to the end cap 213, or the wall portion 211 may also be a side wall of the housing body 212 adjacent to and connected to the end cap 213.

When assembling the battery cell 20, the electrode assembly 24 may first be placed into the housing body 212, and an electrolytic solution may be filled into the housing body 212, after which the end cap 213 is covered onto the opening 2121 of the housing body 212 to complete the assembly of the battery cell 20.

The housing body 212 may have various shapes, such as a cylinder, cuboid, or prismatic structure, or the like. The shape of the housing body 212 may be determined based on the specific shape of the electrode assembly 24. For example, if the electrode assembly 24 is a cylindrical structure, a cylindrical housing body 212 may be selected; if the electrode assembly 24 is a cuboid structure, a cuboid housing body 212 may be selected. Certainly, the structure of the end cap 213 may also vary, for example, the end cap 213 may be a plate-like structure or a hollow structure with one end open, or the like. Illustratively, in FIG. 4, the housing body 212 is a cuboid structure.

Certainly, it is understandable that the housing 21 is not limited to the above structure, and the housing 21 may alternatively have another structure. For example, the housing 21 may include a housing body 212 and two end caps 213, where the housing body 212 is a hollow structure with openings 2121 on opposite sides, and one end cap 213 correspondingly covers one opening 2121 of the housing body 212 and forms a sealed connection to form a sealed space for accommodating the electrode assembly 24 and the electrolyte, that is, the housing body 212 has openings 2121 formed on opposite sides, and the two end caps 213 respectively cover the two sides of the housing body 212 to seal the corresponding openings 2121.

The wall portion 211 has a first surface 2111 facing away from the interior of the housing 21, that is, the surface of the wall portion 211 on the side facing away from the electrode assembly 24 in its thickness direction is the first surface 2111.

The first surface 2111 is provided with a groove 2112, and the groove bottom surface of the groove 2112 is provided with a pressure relief hole 2113, that is, the wall portion 211 is provided with a groove 2112 on the side facing away from the electrode assembly 24 in its thickness direction, and the pressure relief hole 2113 is disposed on the groove bottom surface of the groove 2112, that is, the pressure relief hole 2113 penetrates the bottom wall of the groove 2112 along the thickness direction X of the wall portion to communicate the groove 2112 with the interior of the housing 21.

The pressure relief mechanism 22 is disposed in the pressure relief hole 2113, that is, the pressure relief mechanism 22 is installed in the pressure relief hole 2113, where the pressure relief mechanism 22 serves to release pressure, used to release the internal pressure of the battery cell 20 when the internal pressure or temperature of the battery cell 20 reaches a predetermined value. The pressure relief mechanism 22 and the wall portion 211 may be a separate structure, that is, the pressure relief mechanism 22 and the wall portion 211 are independent components, and the pressure relief mechanism 22 may be connected to the wall portion 211 by welding or bonding, or the like. Certainly, the pressure relief mechanism 22 and the wall portion 211 may also be an integral structure, that is, the pressure relief mechanism 22 is a weak structure formed on the wall portion 211 that cracks when the battery cell 20 releases pressure, such as an area of the wall portion 211 provided with a scored groove.

In FIG. 5 and FIG. 6, the pressure relief mechanism 22 and the wall portion 211 are a separate structure, and the pressure relief mechanism 22 is welded to the wall surface of the pressure relief hole 2113. Illustratively, the pressure relief mechanism 22 may be a component such as an explosion-proof valve, explosion-proof disc, air valve, pressure relief valve, or safety valve.

The first shielding member 23 is connected to the first surface 2111 and covers the groove 2112, that is, the first shielding member 23 is connected to the side of the wall portion 211 facing away from the electrode assembly 24 and covers the groove 2112 to shield the groove 2112.

Optionally, the material of the first shielding member 23 may vary, and the first shielding member 23 may be a non-metallic material, such as rubber, silicone, or plastic, or the like. Certainly, the first shielding member 23 may also be a metallic material, such as copper, iron, aluminum, or steel, or the like. Similarly, the structure for connecting the first shielding member 23 to the first surface 2111 may also vary, and the first shielding member 23 may be connected to the first surface 2111 by bonding, welding, or snapping, or the like. Illustratively, in the embodiments of the present application, the first shielding member 23 is bonded to the first surface 2111. Illustratively, the first shielding member 23 may be bonded to the first surface 2111 using glue or double-sided tape, or the like.

In some embodiments, the battery cell 20 may further include electrode terminals 25, where the electrode terminals 25 are insulatedly installed on the housing 21, and the electrode terminals 25 are electrically connected to the electrode assembly 24 to output or input electrical energy of the battery cell 20.

It should be noted that the electrode terminals 25 are insulatedly installed on the housing 21, that is, no electrical connection is formed between the electrode terminals 25 and the housing 21.

In FIG. 3 and FIG. 4, the battery cell 20 includes two electrode terminals 25, and correspondingly, each electrode assembly 24 has two tabs 241, where the two tabs 241 has with opposite polarities, and the two electrode terminals 25 are respectively electrically connected to the two tabs 241 of the electrode assembly 24 to achieve the input or output of the positive and negative electrodes of the battery cell 20. It should be noted that the tab 241 of the electrode assembly 24 is a component formed by stacking and connecting regions of the positive electrode plate not coated with positive electrode active material or regions of the negative electrode plate not coated with negative electrode active material. If the tab 241 is used to output the positive electrode of the electrode assembly 24, the tab 241 is a component formed by stacking and connecting regions of the positive electrode plate not coated with positive electrode active material; if the tab 241 is used to output the negative electrode of the electrode assembly 24, the tab 241 is a component formed by stacking and connecting regions of the negative electrode plate not coated with negative electrode active material.

Illustratively, the material of the electrode terminals 25 may also vary, for example, the material of the electrode terminals 25 may be copper, iron, aluminum, steel, or aluminum alloy, or the like.

The structure for installing the electrode terminals 25 on the housing 21 may vary, and illustratively, in FIG. 3 and FIG. 4, both electrode terminals 25 are installed on the end cap 213 of the housing 21. Certainly, the structure of the battery cell 20 is not limited to this, and in other embodiments, both electrode terminals 25 may also be installed on the housing body 212 of the housing 21, or one of the two electrode terminals 25 may be installed on the housing body 212 of the housing 21, and the other electrode terminal 25 may be installed on the end cap 213 of the housing 21.

In some embodiments, the battery cell 20 may further include an insulator 26, where along the thickness direction X of the wall portion, the insulator 26 is disposed on the side of the wall portion 211 facing the electrode assembly 24, and the insulator 26 is used to separate the electrode assembly 24 from the wall portion 211 to insulate and isolate the electrode assembly 24 and the wall portion 211, thereby reducing the risk of short-circuiting in the battery cell 20.

Illustratively, the material of the insulator 26 may vary, such as rubber, plastic, or silicone, or the like.

By providing the groove 2112 on the first surface 2111 of the wall portion 211 and disposing the pressure relief hole 2113 on the groove bottom surface of the groove 2112, the pressure relief mechanism 22 disposed in the pressure relief hole 2113 is a structure recessed away from the first surface 2111, thereby reducing the impact and abrasion of the pressure relief mechanism 22 from the external environment. With the first shielding member 23 provided on the first surface 2111 and the first shielding member 23 covering the groove 2112, the first shielding member 23 can shield the groove 2112, mitigating the entry of impurities or electrolyte into the groove 2112. This helps reduce the accumulation of contaminants or electrolyte in the groove 2112, thereby reducing corrosion of the pressure relief mechanism 22 caused by impurities or electrolyte accumulated in the groove 2112 entering the pressure relief hole 2113, so as to mitigate premature actuation and pressure relief of the pressure relief mechanism 22 caused by damage, and facilitating the improvement of the service life and use reliability of the pressure relief mechanism 22, so as to enhance the use reliability and service life of the battery cell 20.

According to some embodiments of the present application, as shown in FIG. 4, FIG. 5, and FIG. 6, the first shielding member 23 or the wall portion 211 is provided with a first exhaust passage 27, and the first exhaust passage 27 communicates the groove 2112 with an exterior of the housing 21.

The wall portion 211 or the first shielding member 23 is provided with a first exhaust passage 27, and the first exhaust passage 27 communicates the groove 2112 with the exterior of the housing 21, that is, the first exhaust passage 27 may be provided on the wall portion 211 or on the first shielding member 23, and the first exhaust passage 27 serves to communicate the groove 2112 with the exterior of the housing 21, so that the pressure relief hole 2113 can communicate with the exterior of the housing 21. It should be noted that the exterior of the housing 21 refers to the external environment of the battery cell 20.

Illustratively, in FIG. 4 and FIG. 5, the first exhaust passage 27 is provided on the wall portion 211. Certainly, in other embodiments, the first exhaust passage 27 may also be provided on the first shielding member 23.

By providing the first exhaust passage 27 that communicates the groove 2112 with the exterior of the housing 21 on the first shielding member 23 or the wall portion 211, the pressure relief hole 2113 is in communication with the exterior of the housing 21. In addition to making the first shielding member 23 prevent impurities or electrolyte from entering the pressure relief hole 2113, the battery cell 20 of this structure can also facilitate the smooth discharge of gas released by the pressure relief mechanism 22 to the exterior of the housing 21 and allow the pressure relief hole 2113 to communicate with the exterior of the housing 21, mitigating the collapse or indentation of the first shielding member 23 during negative pressure testing for airtightness of the battery cell 20. This helps reduce the risk of damage, impairment, or the like to the first shielding member 23.

According to some embodiments of the present application, as shown in FIG. 4, FIG. 5, or FIG. 6, the first exhaust passage 27 is a first ventilation groove 2114 provided on the first surface 2111, the first ventilation groove 2114 extends to the groove side surface of the groove 2112, and along the thickness direction X of the wall portion, the first shielding member 23 covers only a portion of the first ventilation groove 2114.

The first exhaust passage 27 is a first ventilation groove 2114 provided on the first surface 2111, and the first ventilation groove 2114 extends to the groove side surface of the groove 2112, that is, the wall portion 211 is provided with a first ventilation groove 2114, and the first ventilation groove 2114 extends to the first surface 2111 and the groove side surface of the groove 2112, that is, the first surface 2111 of the wall portion 211 is provided with a first ventilation groove 2114, and the first ventilation groove 2114 penetrates the groove side surface of the groove 2112 in its extension direction to communicate the groove 2112 with the exterior of the housing 21 through the first ventilation groove 2114.

Along the thickness direction X of the wall portion, the first shielding member 23 covers only a portion of the first ventilation groove 2114, that is, the projection of the first shielding member 23 in the thickness direction X of the wall portion overlaps only with a portion of the projection of the first ventilation groove 2114 in the thickness direction X of the wall portion, so that the exhaust port formed by the first ventilation groove 2114 on the first surface 2111 is not completely shielded by the first shielding member 23.

Illustratively, in FIG. 5 and FIG. 6, one first ventilation groove 2114 is provided on the first surface 2111, and the first ventilation groove 2114 is a strip-shaped groove structure extending along the radial direction of the groove 2112. In other embodiments, multiple first ventilation grooves 2114 may be provided on the first surface 2111, and the multiple first ventilation grooves 2114 are arranged at intervals along the circumferential direction of the groove 2112, for example, the number of first ventilation grooves 2114 provided on the first surface 2111 may be two, three, four, or five, or the like. Similarly, the shape of the first ventilation groove 2114 may also vary, for example, the first ventilation groove 2114 may be a strip-shaped groove structure extending along a curve, or an elliptical groove structure, or a trapezoidal groove structure, or the like.

With the first exhaust passage 27 provided as the first ventilation groove 2114 provided on the first surface 2111 of the wall portion 211, and the first ventilation groove 2114 penetrating the groove side surface of the groove 2112, the first ventilation groove 2114 can communicate the groove 2112 with the exterior of the housing 21, achieving communication between the pressure relief hole 2113 and the exterior of the housing 21. This structure is simple and easy to implement.

According to some embodiments of the present application, referring to FIG. 5 and FIG. 6, and further referring to FIG. 7, FIG. 7 is a top view of a battery cell 20 (with the first shielding member 23 removed) provided by some embodiments of the present application. The first surface 2111 is provided with an electrolyte injection hole 2115 for injecting an electrolyte into the interior of the housing 21, the electrolyte injection hole 2115 and the groove 2112 are arranged along a first direction Y, and the first direction Y is perpendicular to the thickness direction X of the wall portion. Along the first direction Y, the groove 2112 has a first end 2112a farthest from the electrolyte injection hole 2115 and a second end 2112b closest to the electrolyte injection hole 2115, and a distance between the first ventilation groove 2114 and the first end 2112a is less than a distance between the first ventilation groove 2114 and the second end 2112b.

The electrolyte injection hole 2115 penetrates the wall portion 211 along the first direction Y to communicate with the interior of the housing 21, thereby allowing electrolyte to be injected into the housing 21 through the electrolyte injection hole 2115. In some embodiments, the battery cell 20 may further include an electrolyte injection plug, where the electrolyte injection plug is disposed in the electrolyte injection hole 2115 to seal the electrolyte injection hole 2115.

Illustratively, the wall portion 211 is a rectangular structure, and correspondingly, the electrolyte injection hole 2115 and the groove 2112 are arranged at intervals along the length direction of the wall portion 211, that is, the first direction Y is the length direction of the wall portion 211. Certainly, in other embodiments, the electrolyte injection hole 2115 and the groove 2112 may also be arranged at intervals along the width direction of the wall portion 211.

Along the first direction Y, the groove 2112 has a first end 2112a farthest from the electrolyte injection hole 2115 and a second end 2112b closest to the electrolyte injection hole 2115, that is, the first end 2112a and the second end 2112b are the two ends of the groove 2112 in the first direction Y, respectively.

The distance between the first ventilation groove 2114 and the first end 2112a is less than the distance between the first ventilation groove 2114 and the second end 2112b, that is, the first ventilation groove 2114 is closer to the first end 2112a of the groove 2112 in the first direction Y, that is, the first ventilation groove 2114 is located on the side of the midplane 2112c of the groove facing away from the electrolyte injection hole 2115, where the midplane 2112c of the groove is perpendicular to the first direction Y, and in the first direction Y, the distance from the first end 2112a to the midplane 2112c of the groove is equal to the distance from the second end 2112b to the midplane 2112c of the groove. Illustratively, in FIG. 7, the groove 2112 is elliptical in shape, and the groove 2112 is a structure that is mirror-symmetric with respect to the midplane.

The first surface 2111 of the wall portion 211 is further provided with the electrolyte injection hole 2115, and the electrolyte injection hole 2115 and the groove 2112 are arranged along the first direction Y, such that the groove 2112 has the first end 2112a farthest from the electrolyte injection hole 2115 and the second end 2112b closest to the electrolyte injection hole 2115 in the first direction Y. By configuring the first ventilation groove 2114 such that the distance between it and the first end 2112a is less than the distance between it and the second end 2112b in the first direction Y, the first ventilation groove 2114 is provided on a side of a midplane 2112c of the groove facing away from the electrolyte injection hole 2115 in the first direction Y, allowing the first ventilation groove 2114 to be distant from the electrolyte injection hole 2115. In this way, the risk of the electrolyte entering the groove 2112 through the first ventilation groove 2114 when the electrolyte is injected into the interior of the housing 21 through the electrolyte injection hole 2115.

According to some embodiments of the present application, as shown in FIG. 5, FIG. 6, and FIG. 7, an end of the first ventilation groove 2114 in its extension direction extends to the groove side surface of the groove 2112, and an area of a cross-section of the first ventilation groove 2114 is S₁, satisfying S₁ ≤ 10 mm², where the cross-section of the first ventilation groove 2114 is perpendicular to the extension direction of the first ventilation groove 2114.

Illustratively, in FIG. 7, the first ventilation groove 2114 is a strip-shaped groove structure extending along the first direction Y, and correspondingly, the area of the cross-sectional S₁ of the first ventilation groove 2114 is the area of the cross-section of the first ventilation groove 2114 perpendicular to the first direction Y.

By setting the area of the cross-section of the first ventilation groove 2114 to be less than or equal to 10 mm², an overly large ventilation area of the first ventilation groove 2114 leads to an excessively large likelihood of the electrolyte entering the groove 2112 is mitigated, which helps reduce the risk of the electrolyte entering the groove 2112 through the first ventilation groove 2114.

In some embodiments, the area of the cross-section of the first ventilation groove 2114 is S₁, satisfying 0.1 mm² ≤ S₁ ≤ 1 mm².

Illustratively, the area of the cross-sectional S₁ of the first ventilation groove 2114 may be 0.1 mm², 0.15 mm², 0.2 mm², 0.25 mm², 0.3 mm², 0.4 mm², 0.5 mm², 0.6 mm², 0.7 mm², 0.8 mm², 0.85 mm², 0.9 mm², or 1 mm², or the like.

By setting the area of the cross-section of the first ventilation groove 2114 to be greater than or equal to 0.1 mm², the ventilation effect of the first ventilation groove 2114 is enhanced, helping to mitigate the poor ventilation effect of the first ventilation groove 2114. Additionally, further setting the area of the cross-section of the first ventilation groove 2114 to be less than or equal to 1 mm² helps to reduce the likelihood of the electrolyte entering the groove 2112, thereby further reducing the risk of the electrolyte entering the groove 2112 through the first ventilation groove 2114.

According to some embodiments of the present application, as shown in FIG. 5 and FIG. 6, the groove bottom surface of the groove 2112 is provided with a first protrusion 2116 protruding therefrom, the first protrusion 2116 is arranged around the pressure relief hole 2113, and an annular groove 2117 is formed between the first protrusion 2116 and the groove side surface of the groove 2112. The first ventilation groove 2114 communicates the annular groove 2117 with the exterior of the housing 21, and along the thickness direction X of the wall portion, the first protrusion 2116 is spaced apart from the first shielding member 23.

The first protrusion 2116 is arranged around the pressure relief hole 2113, that is, the first protrusion 2116 is an annular structure disposed on the groove bottom surface of the groove 2112 and extending along the circumferential direction of the pressure relief hole 2113.

An annular groove 2117 is formed between the first protrusion 2116 and the groove side surface of the groove 2112, that is, the first protrusion 2116 is spaced apart from the groove side surface of the groove 2112, forming an annular groove 2117 between the first protrusion 2116 and the groove side surface of the groove 2112.

Optionally, in FIG. 6, the first protrusion 2116 is entirely located within the groove 2112, so that the first protrusion 2116 does not extend beyond the first surface 2111 in the thickness direction X of the wall portion, and the inner peripheral surface of the first protrusion 2116 is flush with a portion of the wall surface of the pressure relief hole 2113.

The groove bottom surface of the groove 2112 is further provided with the first protrusion 2116 protruding therefrom, and the first protrusion 2116 is arranged around the pressure relief hole 2113, so that the annular groove 2117 is formed between the first protrusion 2116 and the groove side surface of the groove 2112. With the first protrusion 2116 spaced apart from the first shielding member 23 and with the first ventilation groove 2114 communicating the annular groove 2117 with the exterior of the housing 21, the pressure relief hole 2113 is a structure that communicates with the exterior of the housing 21 sequentially through a gap between the first protrusion 2116 and the first shielding member 23, the annular groove 2117, and the first ventilation groove 2114. In addition to enabling communication between the pressure relief hole 2113 and the exterior of the housing 21, this can allow the first protrusion 2116 to block the electrolyte that has entered the groove 2112, such that the electrolyte that has entered the groove 2112 through the first ventilation groove 2114 can be contained in the annular groove 2117, thereby further reducing the phenomena of the electrolyte entering the pressure relief hole 2113, so as to lower the risk of the electrolyte corroding the pressure relief mechanism 22.

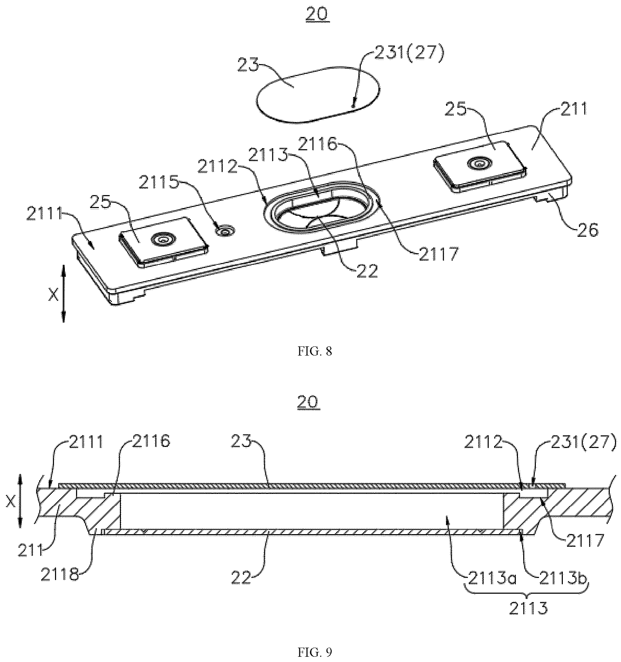

Certainly, the structure of the first exhaust passage 27 is not limited to this. According to some embodiments of the present application, referring to FIG. 8 and FIG. 9, FIG. 8 is a partial schematic structural diagram of a battery cell 20 provided by some other embodiments of the present application, and FIG. 9 is a partial cross-sectional view of a battery cell 20 provided by some other embodiments of the present application. The first exhaust passage 27 may alternatively be a first through-hole 231 provided on the first shielding member 23, and along the thickness direction X of the wall portion, a projection of the first through-hole 231 is located within the groove 2112.

The first through-hole 231 penetrates the first shielding member 23 along the thickness direction X of the wall portion, and the projection of the first through-hole 231 in the thickness direction X of the wall portion is located within the groove 2112, achieving communication between the groove 2112 and the exterior of the housing 21 through the first through-hole 231.

Illustratively, in FIG. 8, the first shielding member 23 is provided with only one first through-hole 231. In other embodiments, multiple first through-holes 231 may be provided on the first shielding member 23, such as two, three, four, or five, or the like.

With the first exhaust passage 27 provided as the first through-hole 231 provided on the first shielding member 23 and the projection of the first through-hole 231 in the thickness direction X of the wall portion being located within the groove 2112, the first through-hole 231 can communicate the groove 2112 with the exterior of the housing 21, achieving communication between the pressure relief hole 2113 and the exterior of the housing 21. This structure is simple and easy to process, facilitating the reduction of manufacturing difficulty for the first exhaust passage 27.

According to some embodiments of the present application, as shown in FIG. 9, along the thickness direction X of the wall portion, the projection of the first through-hole 231 does not overlap with a projection of the pressure relief hole 2113. That is, the projection of the first through-hole 231 in the thickness direction X of the wall portion does not fall within the pressure relief hole 2113, so that the first through-hole 231 is not aligned with the pressure relief hole 2113, and the projection of the first through-hole 231 in the thickness direction X of the wall portion is located in a region of the groove bottom surface of the groove 2112 where the pressure relief hole 2113 is not provided.

The projection of the first through-hole 231 in the thickness direction X of the wall portion is set to not overlap with the projection of the pressure relief hole 2113 in the thickness direction X of the wall portion, so that the first through-hole 231 and the pressure relief hole 2113 are structures misaligned in the thickness direction X of the wall portion. This can mitigate the phenomena of the electrolyte directly entering the pressure relief hole 2113 through the first through-hole 231, allowing the groove bottom surface of the groove 2112 to catch the electrolyte entering through the first through-hole 231, thereby helping to mitigate corrosion of the pressure relief mechanism 22 caused by the electrolyte directly entering the pressure relief hole 2113 through the first through-hole 231.

In some embodiments, as shown in FIG. 8 and FIG. 9, the groove bottom surface of the groove 2112 is provided with a first protrusion 2116 protruding therefrom, the first protrusion 2116 is arranged around the pressure relief hole 2113, and an annular groove 2117 is formed between the first protrusion 2116 and the groove side surface of the groove 2112. Along the thickness direction X of the wall portion, the first protrusion 2116 is spaced apart from the first shielding member 23, and the projection of the first through-hole 231 is located within the annular groove 2117.

The first protrusion 2116 is arranged around the pressure relief hole 2113, that is, the first protrusion 2116 is an annular structure disposed on the groove bottom surface of the groove 2112 and extending along the circumferential direction of the pressure relief hole 2113.

An annular groove 2117 is formed between the first protrusion 2116 and the groove side surface of the groove 2112, that is, the first protrusion 2116 is spaced apart from the groove side surface of the groove 2112, forming an annular groove 2117 between the first protrusion 2116 and the groove side surface of the groove 2112.

The projection of the first through-hole 231 is located within the annular groove 2117, that is, in the thickness direction X of the wall portion, the first through-hole 231 corresponds to the annular groove 2117, that is, the projection of the first through-hole 231 in the thickness direction X of the wall portion is located within the groove bottom surface of the annular groove 2117.

Optionally, in FIG. 9, the first protrusion 2116 is entirely located within the groove 2112, so that the first protrusion 2116 does not extend beyond the first surface 2111 in the thickness direction X of the wall portion, and the inner peripheral surface of the first protrusion 2116 is flush with a portion of the wall surface of the pressure relief hole 2113.

The groove bottom surface of the groove 2112 is further provided with the first protrusion 2116 protruding therefrom, and the first protrusion 2116 is arranged around the pressure relief hole 2113, so that the annular groove 2117 is formed between the first protrusion 2116 and the groove side surface of the groove 2112. With the first protrusion 2116 spaced apart from the first shielding member 23 and the projection of the first through-hole 231 in the thickness direction X of the wall portion located within the annular groove 2117, the pressure relief hole 2113 is a structure that communicates with the exterior of the housing 21 sequentially through a gap between the first protrusion 2116 and the first shielding member 23, the annular groove 2117, and the first through-hole 231. In addition to enabling communication between the pressure relief hole 2113 and the exterior of the housing 21, this can allow the first protrusion 2116 to block the electrolyte entering the groove 2112, such that the electrolyte entering the groove 2112 through the first through-hole 231 can be contained in the annular groove 2117, thereby further reducing the phenomena of the electrolyte entering the pressure relief hole 2113, so as to lower the risk of the electrolyte corroding the pressure relief mechanism 22.

According to some embodiments of the present application, as shown in FIG. 8 and FIG. 9, an area of a cross-section of the first through-hole 231 is S₂, satisfying S₂ ≤ 10 mm².

The area of the cross-sectional S₂ of the first through-hole 231 is the area of the cross-section of the first through-hole 231 perpendicular to the thickness direction X of the wall portion, which is also the area of the region defined by the projection of the first through-hole 231 in the thickness direction X of the wall portion.

By setting the area of the cross-section of the first through-hole 231 to be less than or equal to 10 mm², an overly large ventilation area of the first through-hole 231 leads to an excessively large likelihood of the electrolyte entering the groove 2112 due is mitigated, helping reduce the risk of the electrolyte entering the groove 2112 through the first through-hole 231.

In some embodiments, the area of the cross-section of the first through-hole 231 is S₂, satisfying 0.1 mm² ≤ S₂ ≤ 1 mm².

Illustratively, the area of the cross-sectional S₂ of the first through-hole 231 may be 0.1 mm², 0.15 mm², 0.2 mm², 0.25 mm², 0.3 mm², 0.4 mm², 0.5 mm², 0.6 mm², 0.7 mm², 0.8 mm², 0.85 mm², 0.9 mm², or 1 mm², or the like.

By setting the area of the cross-section of the first through-hole 231 to be greater than or equal to 0.1 mm², the ventilation effect of the first through-hole 231 is enhanced, helping to mitigate the poor ventilation effect of the first through-hole 231. Additionally, further setting the area of the cross-section of the first through-hole 231 to be less than or equal to 1 mm² helps to further reduce the likelihood of the electrolyte entering the groove 2112 is further reduced, so as to further reduce the risk of the electrolyte entering the groove 2112 through the first through-hole 231.

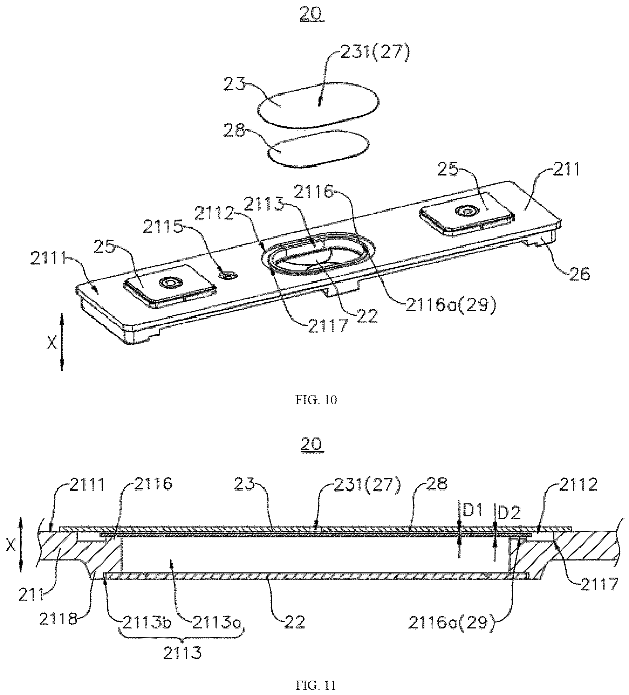

According to some embodiments of the present application, referring to FIG. 10 and FIG. 11, FIG. 10 is a partial schematic structural diagram of a battery cell 20 provided by some further embodiments of the present application, and FIG. 11 is a partial cross-sectional view of a battery cell 20 provided by some further embodiments of the present application. The groove bottom surface of the groove 2112 is provided with a first protrusion 2116 protruding therefrom, the first protrusion 2116 is arranged around the pressure relief hole 2113, and an annular groove 2117 is formed between the first protrusion 2116 and the groove side surface of the groove 2112.

The first protrusion 2116 is arranged around the pressure relief hole 2113, that is, the first protrusion 2116 is an annular structure disposed on the groove bottom surface of the groove 2112 and extending along the circumferential direction of the pressure relief hole 2113.

An annular groove 2117 is formed between the first protrusion 2116 and the groove side surface of the groove 2112, that is, the first protrusion 2116 is spaced apart from the groove side surface of the groove 2112, forming an annular groove 2117 between the first protrusion 2116 and the groove side surface of the groove 2112.

With the first protrusion 2116 provided protruding from the groove bottom surface of the groove 2112 and the first protrusion 2116 arranged around the pressure relief hole 2113, the annular groove 2117 is formed between the first protrusion 2116 and the groove side surface of the groove 2112, so that the first protrusion 2116 can block electrolyte or impurities entering the groove 2112 to some degree. This allows the electrolyte or impurities to be contained in the annular groove 2117, thereby mitigating the phenomena of the electrolyte or impurities that have entered the groove 2112 further entering the pressure relief hole 2113, so as to reduce the risk of corrosion of the pressure relief mechanism 22 by electrolyte or impurities, and helping to further mitigate premature actuation and pressure relief of the pressure relief mechanism 22 caused by damage, so as to enhance the use reliability and service life of the battery cell 20.

According to some embodiments of the present application, as shown in FIG. 10 and FIG. 11, the battery cell 20 may further include a second shielding member 28. Along the thickness direction X of the wall portion, the second shielding member 28 is connected to the first protrusion 2116, and the second shielding member 28 covers the pressure relief hole 2113.

The second shielding member 28 is connected to the first protrusion 2116, and the second shielding member 28 covers the pressure relief hole 2113, that is, the second shielding member 28 is connected to the first protrusion 2116 and covers the pressure relief hole 2113 in the thickness direction X of the wall portion to shield the pressure relief hole 2113. The structure for connecting the second shielding member 28 to the first protrusion 2116 may vary, and the second shielding member 28 may be connected to the end of the first protrusion 2116 facing the first shielding member 23, that is, the second shielding member 28 covers the end of the second protrusion 2118, or the second shielding member 28 may be connected to the inner peripheral surface of the first protrusion 2116, that is, the first protrusion 2116 surrounds the outer side of the second shielding member 28.

Optionally, the material of the second shielding member 28 may vary, and the second shielding member 28 may be a non-metallic material, such as rubber, silicone, or plastic, or the like. Certainly, the second shielding member 28 may also be a metallic material, such as copper, iron, aluminum, or steel, or the like.

The battery cell 20 is further provided with the second shielding member 28, and the second shielding member 28 is connected to the first protrusion 2116 and covers the pressure relief hole 2113, so that the second shielding member 28 can further shield the pressure relief hole 2113 to some degree, further mitigating the entry of impurities or electrolyte into the groove 2112, reducing corrosion of the pressure relief mechanism 22 caused by impurities or electrolyte entering the pressure relief hole 2113, mitigating premature actuation and pressure relief of the pressure relief mechanism 22 caused by damage, and facilitating the improvement of the service life and use reliability of the pressure relief mechanism 22, so as to enhance the use reliability and service life of the battery cell 20.

In some embodiments, as shown in FIG. 11, along the thickness direction X of the wall portion, the second shielding member 28 is connected to an end of the first protrusion 2116 facing away from the groove bottom surface of the groove 2112.

The second shielding member 28 is connected to the end of the first protrusion 2116 facing away from the groove bottom surface of the groove 2112, that is, the second shielding member 28 is connected to the end of the first protrusion 2116 facing the first shielding member 23, so that the second shielding member 28 covers the end of the first protrusion 2116.

Optionally, the structure for connecting the second shielding member 28 to the first protrusion 2116 may vary, and the second shielding member 28 may be connected to the first protrusion 2116 by bonding, welding, or snapping, or the like. Illustratively, in the embodiments of the present application, the second shielding member 28 is bonded to the end of the first protrusion 2116 facing away from the groove bottom surface of the groove 2112. Illustratively, the second shielding member 28 may be bonded to the first protrusion 2116 using glue or double-sided tape, or the like.

The second shielding member 28 is provided connected to the end of the first protrusion 2116 facing away from the groove bottom surface of the groove 2112, that is, the second shielding member 28 is connected to the end of the first protrusion 2116 facing the first shielding member 23. The battery cell 20 of this structure facilitates the assembly of the second shielding member 28 onto the first protrusion 2116, helps to reduce the difficulty of connecting the second shielding member 28 to the first protrusion 2116, and facilitates the coverage of the pressure relief hole 2113 by the second shielding member 28.

According to some embodiments of the present application, as shown in FIG. 10 and FIG. 11, along the thickness direction X of the wall portion, the first shielding member 23 is spaced apart from the second shielding member 28. The first shielding member 23 or the wall portion 211 is provided with a first exhaust passage 27, the second shielding member 28 or the first protrusion 2116 is provided with a second exhaust passage 29, the first exhaust passage 27 communicates the second exhaust passage 29 with the exterior of the housing 21, and the second exhaust passage 29 communicates the first exhaust passage 27 with the pressure relief hole 2113.

The first shielding member 23 is spaced apart from the second shielding member 28, that is, a gap is formed between the first shielding member 23 and the second shielding member 28.

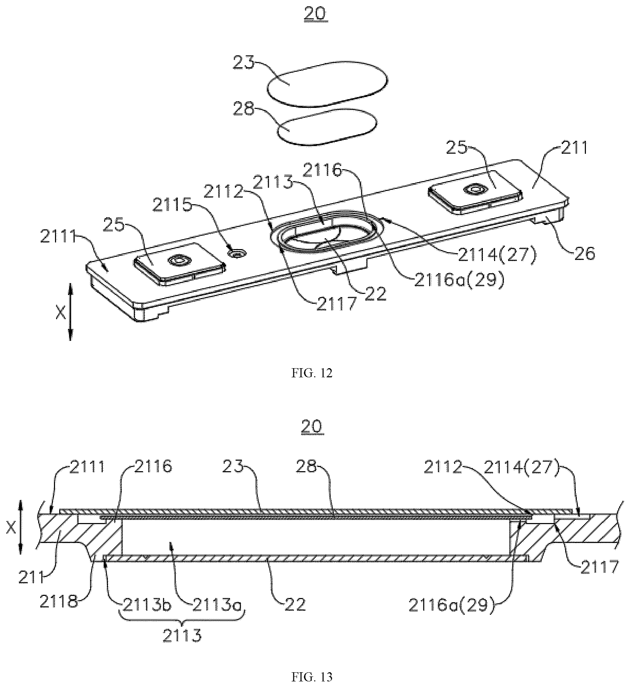

The first shielding member 23 or the wall portion 211 is provided with a first exhaust passage 27, and the first exhaust passage 27 communicates the second exhaust passage 29 with the exterior of the housing 21, that is, the first exhaust passage 27 may be provided on the wall portion 211 or on the first shielding member 23, and the first exhaust passage 27 serves to communicate the second exhaust passage 29 with the exterior of the housing 21, so that the second exhaust passage 29 can communicate with the exterior of the housing 21. Illustratively, in FIG. 10 and FIG. 11, the first exhaust passage 27 is a first through-hole 231 provided on the first shielding member 23, where the first through-hole 231 penetrates the first shielding member 23 along the thickness direction X of the wall portion, and the projection of the first through-hole 231 in the thickness direction X of the wall portion is located within the groove 2112. Certainly, in other embodiments, referring to FIG. 12 and FIG. 13, FIG. 12 is a partial schematic structural diagram of a battery cell 20 provided by some additional embodiments of the present application, and FIG. 13 is a partial cross-sectional view of a battery cell 20 provided by some additional embodiments of the present application. The first exhaust passage 27 may also be a first ventilation groove 2114 provided on the first surface 2111 of the wall portion 211, where the first ventilation groove 2114 extends to the groove side surface of the groove 2112, that is, the first ventilation groove 2114 penetrates the groove side surface of the groove 2112.

The second shielding member 28 or the first protrusion 2116 is provided with a second exhaust passage 29, and the second exhaust passage 29 communicates the first exhaust passage 27 with the pressure relief hole 2113, that is, the second exhaust passage 29 may be provided on the second shielding member 28 or on the first protrusion 2116, and the second exhaust passage 29 serves to communicate the first exhaust passage 27 with the pressure relief hole 2113, so that the pressure relief hole 2113 can communicate with the exterior of the housing 21 sequentially through the second exhaust passage 29 and the first exhaust passage 27.

By providing the first exhaust passage 27 on the first shielding member 23 or the wall portion 211 and the second exhaust passage 29 on the second shielding member 28 or the first protrusion 2116, the pressure relief hole 2113, the second exhaust passage 29, the first exhaust passage 27, and the exterior of the housing 21 are sequentially communicated. In addition to making the first shielding member 23 and the second shielding member 28 prevent impurities or electrolyte from entering the pressure relief hole 2113, the battery cell 20 of this structure can also facilitate the smooth discharge of gas released by the pressure relief mechanism 22 to the exterior of the housing 21 and allow the pressure relief hole 2113 to communicate with the exterior of the housing 21, mitigating the collapse or indentation of the first shielding member 23 and the second shielding member 28 during negative pressure testing for airtightness of the battery cell 20. This helps reduce the risk of damage, impairment, or the like to the first shielding member 23 and the second shielding member 28.

In some embodiments, as shown in FIG. 11, along the thickness direction X of the wall portion, a distance between the first shielding member 23 and the second shielding member 28 is D₁, and a thickness of the second shielding member 28 is D₂, satisfying D₂ ≤ D₁ ≤ 8 D₂.

Preferably, the thickness D₂ of the second shielding member 28 is 0.15 mm.

By setting the distance between the first shielding member 23 and the second shielding member 28 in the thickness direction X of the wall portion to be greater than or equal to the thickness of the second shielding member 28, sufficient space is provided between the first shielding member 23 and the second shielding member 28 for gas flow, and interference between the first shielding member 23 and the second shielding member 28 can be reduced. Additionally, by setting the distance between the first shielding member 23 and the second shielding member 28 in the thickness direction X of the wall portion to be less than or equal to eight times the thickness of the second shielding member 28, excessive space occupation by the first shielding member 23 and the second shielding member 28 can be mitigated, facilitating the optimization of the volume of the battery cell 20 to enhance the energy density of the battery cell 20.

In some embodiments, as shown in FIG. 11, along the thickness direction X of the wall portion, a distance between the first shielding member 23 and the second shielding member 28 is D, satisfying 0.1 mm ≤ D ≤ 1 mm.

Illustratively, the distance D between the first shielding member 23 and the second shielding member 28 may be 0.1 mm, 0.12 mm, 0.15 mm, 0.2 mm, 0.25 mm, 0.3 mm, 0.35 mm, 0.4 mm, 0.5 mm, 0.55 mm, 0.6 mm, 0.7 mm, 0.8 mm, 0.9 mm, or 1 mm, or the like.

Preferably, the distance D between the first shielding member 23 and the second shielding member 28 is 0.5 mm.

By setting the distance between the first shielding member 23 and the second shielding member 28 in the thickness direction X of the wall portion to be greater than or equal to 0.1 mm, sufficient space is provided between the first shielding member 23 and the second shielding member 28 for gas flow, and interference between the first shielding member 23 and the second shielding member 28 can be reduced. Additionally, by setting the distance between the first shielding member 23 and the second shielding member 28 in the thickness direction X of the wall portion to be less than or equal to 1 mm, excessive space occupation by the first shielding member 23 and the second shielding member 28 can be mitigated, facilitating the optimization the volume of the battery cell 20 to enhance the energy density of the battery cell 20.

In some embodiments, as shown in FIG. 10, FIG. 11, FIG. 12, and FIG. 13, the second exhaust passage 29 is a second ventilation groove 2116a provided on the first protrusion 2116, and along a radial direction of the pressure relief hole 2113, the second ventilation groove 2116a extends through two sides of the first protrusion 2116.

The second ventilation groove 2116a is provided on the end surface of the first protrusion 2116 facing the first shielding member 23 in the thickness direction X of the wall portion, and in the radial direction of the pressure relief hole 2113, the second ventilation groove 2116a penetrates the inner peripheral surface and the outer peripheral surface of the first protrusion 2116, so that the pressure relief hole 2113 can communicate with the annular groove 2117 through the second ventilation groove 2116a.

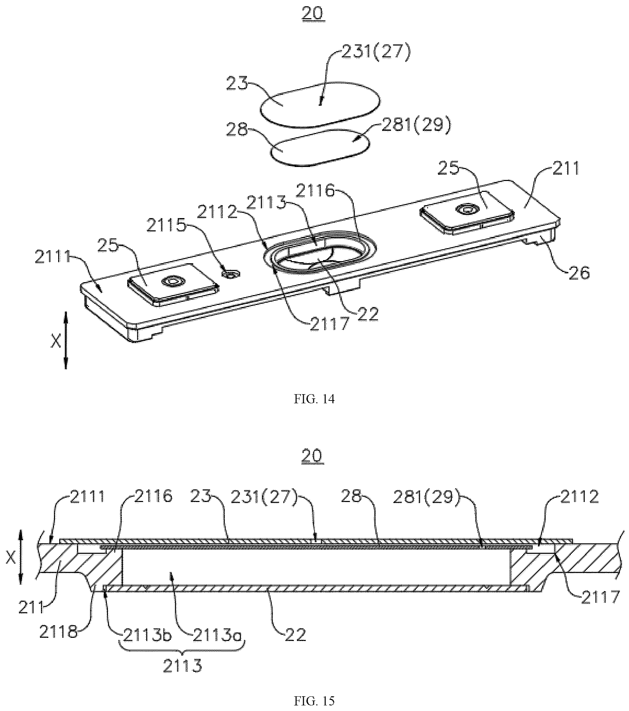

Certainly, the structure of the second exhaust passage 29 is not limited to this. In some embodiments, the second exhaust passage 29 may alternatively be another structure. Referring to FIG. 14 and FIG. 15, FIG. 14 is a partial schematic structural diagram of a battery cell 20 provided by some yet further embodiments of the present application, and FIG. 15 is a partial cross-sectional view of a battery cell 20 provided by some yet further embodiments of the present application. The second exhaust passage 29 is a second through-hole 281 provided on the second shielding member 28, and a projection of the second through-hole 281 along the thickness direction X of the wall portion is located within the pressure relief hole 2113. The second through-hole 281 penetrates the second shielding member 28 along the thickness direction X of the wall portion, so that the pressure relief hole 2113 can communicate with the annular groove 2117 sequentially through the second through-hole 281 and a gap between the first shielding member 23 and the second shielding member 28.

That is, in embodiments where the battery cell 20 is provided with the first shielding member 23 and the second shielding member 28, the first exhaust passage 27 may be a first ventilation groove 2114 provided on the first surface 2111 of the wall portion 211 or a first through-hole 231 provided on the first shielding member 23, and correspondingly, the second exhaust passage 29 may be a second ventilation groove 2116a provided on the first protrusion 2116 or a second through-hole 281 provided on the second shielding member 28.

With the second exhaust passage 29 provided as the second ventilation groove 2116a provided on the first protrusion 2116 and the second ventilation groove 2116a extending through two sides of the first protrusion 2116 along the radial direction of the pressure relief hole 2113, the second ventilation groove 2116a communicates the pressure relief hole 2113 with the annular groove 2117, enabling communication between the pressure relief hole 2113 and the first exhaust passage 27. This structure is simple and easy to implement. Similarly, the second exhaust passage 29 can also be provided as the second through-hole 281 provided on the second shielding member 28, and the projection of the second through-hole 281 in the thickness direction X of the wall portion is located within the pressure relief hole 2113, enabling communication between the pressure relief hole 2113 and the first exhaust passage 27. This structure is simple and easy to process, facilitating the reduction of manufacturing difficulty for the second exhaust passage 29.

According to some embodiments of the present application, as shown in FIG. 14 and FIG. 15, the first exhaust passage 27 is a first through-hole 231 provided on the first shielding member 23, and the second exhaust passage 29 is a second through-hole 281 provided on the second shielding member 28; and along the thickness direction X of the wall portion, a projection of the first through-hole 231 is located within the groove 2112, a projection of the second through-hole 281 is located within the pressure relief hole 2113, and the projection of the first through-hole 231 and the projection of the second through-hole 281 do not overlap.

The first exhaust passage 27 and the second exhaust passage 29 are respectively a first through-hole 231 provided on the first shielding member 23 and a second through-hole 281 provided on the second shielding member 28, so that the pressure relief hole 2113 is structured to communicate with the exterior of the housing 21 sequentially through the second through-hole 281, the gap between the first shielding member 23 and the second shielding member 28, and the first through-hole 231.

The projection of the first through-hole 231 and the projection of the second through-hole 281 do not overlap, that is, in a direction perpendicular to the thickness direction X of the wall portion, the first through-hole 231 and the second through-hole 281 are arranged at intervals, so that the first through-hole 231 and the second through-hole 281 are misaligned.

The first exhaust passage 27 and the second exhaust passage 29 are respectively provided as the first through-hole 231 provided on the first shielding member 23 and the second through-hole 281 provided on the second shielding member 28, and the projections of the first through-hole 231 and the second through-hole 281 in the thickness direction X of the wall portion are set to not overlap, so that the first through-hole 231 and the second through-hole 281 are structures misaligned in the thickness direction X of the wall portion. This can effectively mitigate the phenomena of the electrolyte directly entering the second through-hole 281 after entering the first through-hole 231, reducing the risk of the electrolyte sequentially passing through the first through-hole 231 and the second through-hole 281 to enter the pressure relief hole 2113 and corrode the pressure relief mechanism 22.

According to some embodiments of the present application, as shown in FIG. 11, FIG. 13, and FIG. 15, a projection of an edge of the second shielding member 28 in the thickness direction X of the wall portion is located within the annular groove 2117.

The projection of the edge of the second shielding member 28 in the thickness direction X of the wall portion is located within the annular groove 2117, that is, in the radial direction of the pressure relief hole 2113, the second shielding member 28 extends beyond the outer peripheral surface of the first protrusion 2116, that is, in the thickness direction X of the wall portion, the second shielding member 28 covers the first protrusion 2116.

With the edge of the second shielding member 28 such that its projection in the thickness direction X of the wall portion set to be located within the annular groove 2117, the second shielding member 28 is a structure that covers the first protrusion 2116 in the thickness direction X of the wall portion, facilitating the connection of the second shielding member 28 to the first protrusion 2116, helping to enhance the structural stability of connecting the second shielding member 28 to the first protrusion 2116, and improving the effect of the second shielding member 28 shielding the pressure relief hole 2113.

In some embodiments, as shown in FIG. 11, FIG. 13, and FIG. 15, along the thickness direction X of the wall portion, the first protrusion 2116 does not extend beyond the first surface 2111.

In the thickness direction X of the wall portion, the first protrusion 2116 is entirely located within the groove 2112, and the first protrusion 2116 is spaced apart from the first surface 2111.

With the first protrusion 2116 set to not extend beyond the first surface 2111 in the thickness direction X of the wall portion, the first protrusion 2116 is a structure entirely located within the groove 2112, effectively reducing interference of the first protrusion 2116 with the first shielding member 23, facilitating the reduction of assembly difficulty for connecting the first shielding member 23 to the first surface 2111, and mitigating local protrusions of the first shielding member 23.

According to some embodiments of the present application, still referring to FIG. 11, FIG. 13, and FIG. 15, along the thickness direction X of the wall portion, the pressure relief hole 2113 includes a first hole segment 2113a closest to the groove 2112, and a wall surface of the first hole segment 2113a is connected to and flush with an inner peripheral surface of the first protrusion 2116.

Illustratively, the pressure relief hole 2113 is a stepped hole structure, and the pressure relief hole 2113 includes a first hole segment 2113a closest to the groove 2112, that is, among the multiple hole segments of the pressure relief hole 2113, the hole segment closest to the groove 2112 is the first hole segment 2113a. Certainly, in other embodiments, the pressure relief hole 2113 may also have only one hole segment, that is, the pressure relief hole 2113 is a straight hole structure, and in such embodiments, the entire pressure relief hole 2113 is the first hole segment 2113a.

Illustratively, in FIG. 11, FIG. 13, and FIG. 15, the pressure relief hole 2113 includes two hole segments, and the hole segment closest to the groove 2112 in the thickness direction X of the wall portion is the first hole segment 2113a. Certainly, in other embodiments, the pressure relief hole 2113 may also be a stepped hole structure including three, four, or five hole segments, or the like.

The wall surface of the first hole segment 2113a is connected to and flush with the inner peripheral surface of the first protrusion 2116, that is, the inner peripheral surface of the first protrusion 2116 is a structure that is connected to and aligned parallel with the wall surface of the first hole segment 2113a, that is, the inner peripheral surface of the first protrusion 2116 is coplanar with the wall surface of the first hole segment 2113a.

The pressure relief hole 2113 has the first hole segment 2113a closest to the groove 2112 in the thickness direction X of the wall portion, and the wall surface of the first hole segment 2113a is arranged to be connected to and flush with the inner peripheral surface of the first protrusion 2116, the forming difficulty of the first protrusion 2116 and the first hole segment 2113a is reduced, so as to enhance the production efficiency of the battery cell 20.

In some embodiments, as shown in FIG. 11, FIG. 13, and FIG. 15, the pressure relief hole 2113 further includes a second hole segment 2113b, and along the thickness direction X of the wall portion, the second hole segment 2113b is located on a side of the first hole segment 2113a facing away from the groove 2112. A hole diameter of the first hole segment 2113a is smaller than a hole diameter of the second hole segment 2113b, and the pressure relief mechanism 22 is disposed in the second hole segment 2113b and covers the first hole segment 2113a.

The hole diameter of the first hole segment 2113a is smaller than the hole diameter of the second hole segment 2113b, that is, the pressure relief hole 2113 is a stepped hole structure with a hole diameter decreasing sequentially in the direction from the first surface 2111 of the wall portion 211 to the interior of the housing 21 in the thickness direction X of the wall portion.

The pressure relief mechanism 22 is disposed in the second hole segment 2113b and covers the first hole segment 2113a, that is, the pressure relief mechanism 22 is installed in the second hole segment 2113b of the pressure relief hole 2113 and seals the first hole segment 2113a. Illustratively, the pressure relief mechanism 22 is connected to a step surface between the first hole segment 2113a and the second hole segment 2113b.

Certainly, the structure of the battery cell 20 is not limited to this. In other embodiments, the battery cell 20 may alternatively have another structure. For example, the hole diameter of the first hole segment 2113a is larger than the hole diameter of the second hole segment 2113b, and the pressure relief mechanism 22 is disposed in the first hole segment 2113a and covers the second hole segment 2113b. That is, the pressure relief hole 2113 is a stepped hole structure with a hole diameter increasing sequentially in the direction from the first surface 2111 of the wall portion 211 to the interior of the housing 21 in the thickness direction X of the wall portion, and the pressure relief mechanism 22 is installed in the first hole segment 2113a, which is the closest to the groove 2112 among the multiple hole segments of the pressure relief hole 2113.

The pressure relief hole 2113 further has the second hole segment 2113b, and the hole diameter of the second hole segment 2113b differs from the hole diameter of the first hole segment 2113a, so that the pressure relief hole 2113 is a stepped hole structure. If the hole diameter of the first hole segment 2113a is smaller than the hole diameter of the second hole segment 2113b, the pressure relief mechanism 22 is disposed in the second hole segment 2113b and covers the first hole segment 2113a. If the hole diameter of the first hole segment 2113a is larger than the hole diameter of the second hole segment 2113b, the pressure relief mechanism 22 is disposed in the first hole segment 2113a and covers the second hole segment 2113b. The battery cell 20 of this structure can provide positioning and limiting functions for the pressure relief mechanism 22 to some degree, helping to enhance structural stability of disposing the pressure relief mechanism 22 in the pressure relief hole 2113, and improving the sealing effect of the pressure relief mechanism 22 for the pressure relief hole 2113.

According to some embodiments of the present application, as shown in FIG. 6, along the thickness direction X of the wall portion, a second protrusion 2118 is formed on a side of the wall portion 211 facing away from the first surface 2111 and at a position corresponding to the groove 2112.

Illustratively, the groove 2112 provided on one side of the wall portion 211 is formed by a stamping process, forming the groove 2112 on the first surface 2111 of the wall portion 211, and forming a second protrusion 2118 on the side of the wall portion 211 facing away from the first surface 2111 at a position corresponding to the groove 2112. Certainly, the processing method for forming the groove 2112 on the first surface 2111 of the wall portion 211 is not limited to this. In other embodiments, the groove 2112 on the first surface 2111 of the wall portion 211 may also be formed by processing techniques such as laser etching, engraving, or casting.

With the second protrusion 2118 formed on the side of the wall portion 211 facing away from the first surface 2111 at the position corresponding to the groove 2112, the groove 2112 of the wall portion 211 is a concave-convex structure that can be formed by stamping, so as to form the groove 2112 and the second protrusion 2118 on two sides of the wall portion 211, respectively. The wall portion 211 of this structure is easy to manufacture and facilitates the reduction of processing difficulty for the groove 2112, enhancing the processing efficiency of the groove 2112.

According to some embodiments of the present application, as shown in FIG. 3 and FIG. 4, the housing 21 may include a housing body 212 and an end cap 213. An accommodation cavity with an opening 2121 is formed in an interior of the housing body 212, the accommodation cavity is configured to accommodate an electrode assembly 24, the end cap 213 seals the opening 2121, and the end cap 213 is the wall portion 211.

The end cap 213 is the wall portion 211, that is, the groove 2112 and the pressure relief hole 2113 are provided on the end cap 213, and the pressure relief mechanism 22 is provided on the end cap 213, that is, the surface of the end cap 213 facing away from the electrode assembly 24 is the first surface 2111.

It should be noted that the structure of the battery cell 20 is not limited to this. In some embodiments, the battery cell 20 may alternatively have another structure. For example, the housing body 212 includes the wall portion 211, that is, the pressure relief mechanism 22 is provided on one wall of the housing body 212. The pressure relief mechanism 22 may be provided on the bottom wall of the housing body 212 opposite to the end cap 213 or on a side wall of the housing body 212 adjacent to and connected to the end cap 213.

The wall portion 211 may be the end cap 213 of the housing 21 or a part of the housing body 212 of the housing 21. With the wall portion 211 of the housing 21 provided as the end cap 213 of the housing 21 configured to seal the opening 2121 of the housing body 212, the battery cell 20 of this structure facilitates the provision of the groove 2112 and the pressure relief hole 2113 on the end cap 213 and the installation of the pressure relief mechanism 22 in the pressure relief hole 2113, helping to reduce the manufacturing difficulty of the battery cell 20 and enhancing the production efficiency of the battery cell 20. Similarly, with the wall portion 211 of the housing 21 provided as one wall of the housing body 212, the battery cell 20 of this structure can reduce the impact of stress generated by the connection between the end cap 213 and the housing body 212 on the pressure relief mechanism 22, mitigating damage and the like to the pressure relief mechanism 22, thereby reducing the risk of premature actuation and pressure relief of the pressure relief mechanism 22, and helping to enhance the use reliability and service life of the battery cell 20.

According to some embodiments of the present application, the present application further provides a battery 100, where the battery 100 includes the battery cell 20 of any of the above solutions.

In some embodiments, as shown in FIG. 2, the battery 100 may further include a box 10, where the box 10 is configured to accommodate the battery cell 20.

The box 10 is used to provide an assembly space for the battery cell 20, and the box 10 may adopt various structures. Illustratively, the box 10 may include a first box body 11 and a second box body 12, where the first box body 11 and the second box body 12 cover each other, and the first box body 11 and the second box body 12 jointly define an assembly space for accommodating the battery cell 20.

Optionally, the second box body 12 may be a hollow structure with one end open, and the first box body 11 may be a plate-like structure, where the first box body 11 covers the open side of the second box body 12, so that the first box body 11 and the second box body 12 jointly define the assembly space. Alternatively, both the first box body 11 and the second box body 12 may be hollow structures with one side open, and the open side of the first box body 11 covers the open side of the second box body 12.

Certainly, the box 10 formed by the first box body 11 and the second box body 12 may have various shapes, such as a cylinder, cube, or cuboid, or the like. Illustratively, in FIG. 2, the shape of the box 10 is a cuboid.

Optionally, there may be one or multiple battery cells 20 accommodated in the box 10. Illustratively, in FIG. 2, the battery 100 may include multiple battery cells 20, and the multiple battery cells 20 may be connected in series, in parallel, or in a mixed connection, where a mixed connection refers to a combination of both series and parallel connections among the multiple battery cells 20. The multiple battery cells 20 may be directly connected in series, in parallel, or in a mixed connection, and the entire module formed by the multiple battery cells 20 is accommodated in the box 10. Certainly, the battery 100 may also be formed by first connecting multiple battery cells 20 in series, in parallel, or in a mixed connection to form a battery module, and then connecting multiple battery modules in series, in parallel, or in a mixed connection to form a whole, which is accommodated in the box 10.

In some embodiments, the battery 100 may further include other structures, for example, the battery 100 may further include a busbar component, where the busbar component is used to connect multiple battery cells 20 to achieve electrical connection between the multiple battery cells 20.

According to some embodiments of the present application, the present application further provides an electric apparatus, where the electric apparatus includes the battery cell 20 of any of the above solutions, and the battery cell 20 is configured to provide electrical energy to the electric apparatus.

The electric apparatus may be any device or system that applies the battery cell 20 as described above.

It should be noted that when the battery cell 20 is installed on the electric apparatus, the battery cell 20 may be directly installed on the electric apparatus, or the battery cell 20 may first be assembled into the box 10 and then assembled onto the electric apparatus through the box 10. For example, taking the electric apparatus as a vehicle 1000, the battery cell 20 may first be assembled into the box 10 to form a battery 100, and then the battery 100 is assembled onto the vehicle 1000. Alternatively, the battery cell 20 may be directly assembled onto the vehicle 1000, that is, the box 10 may be part of the electric apparatus. Taking the electric apparatus as a vehicle 1000, the box 10 may be part of the chassis structure of the vehicle 1000, for example, a part of the box 10 may form at least a portion of the floor of the vehicle 1000, or a part of the box 10 may form at least a portion of the crossbeams and longitudinal beams of the vehicle 1000. Similarly, the number of battery cells 20 provided on the electric apparatus may be one or multiple, and the multiple battery cells 20 may be connected in series, in parallel, or in a mixed connection.

According to some embodiments of the present application, as shown in FIG. 3 to FIG. 7, the present application provides a battery cell 20, where the battery cell 20 includes a housing 21, an electrode assembly 24, a pressure relief mechanism 22, and a first shielding member 23. The housing 21 has a wall portion 211, and the housing 21 includes a housing body 212 and an end cap 213. An accommodation cavity with an opening 2121 is formed in an interior of the housing body 212, the accommodation cavity is configured to accommodate the electrode assembly 24, the end cap 213 seals the opening 2121, and the end cap 213 is the wall portion 211. Along the thickness direction X of the wall portion, the wall portion 211 has a first surface 2111 facing away from the interior of the housing 21, the first surface 2111 is provided with a groove 2112, and the groove bottom surface of the groove 2112 is provided with a pressure relief hole 2113. The pressure relief hole 2113 includes a first hole segment 2113a and a second hole segment 2113b arranged along the thickness direction X of the wall portion, where the first hole segment 2113a is closer to the groove 2112 than the second hole segment 2113b, the hole diameter of the first hole segment 2113a is smaller than the hole diameter of the second hole segment 2113b, and the pressure relief mechanism 22 is disposed in the second hole segment 2113b and covers the first hole segment 2113a, where the pressure relief mechanism 22 is configured to release the internal pressure of the battery cell 20. The groove bottom surface of the groove 2112 is further provided with a first protrusion 2116 protruding therefrom, the first protrusion 2116 is arranged around the pressure relief hole 2113, and an annular groove 2117 is formed between the first protrusion 2116 and the groove side surface of the groove 2112. Along the thickness direction X of the wall portion, the first protrusion 2116 is spaced apart from the first shielding member 23, and the inner peripheral surface of the first protrusion 2116 is connected to and flush with the wall surface of the first hole segment. A second protrusion 2118 is formed on a side of the wall portion 211 facing away from the first surface 2111 and at a position corresponding to the groove 2112. The first shielding member 23 is connected to the first surface 2111 and covers the groove 2112, and the wall portion 211 is provided with a first exhaust passage 27, where the first exhaust passage 27 communicates the annular groove 2117 with the exterior of the housing 21. The first exhaust passage 27 is a first ventilation groove 2114 provided on the first surface 2111, the first ventilation groove 2114 extends to the groove side surface of the groove 2112, and along the thickness direction X of the wall portion, the first shielding member 23 covers only a portion of the first ventilation groove 2114. The first surface 2111 is provided with an electrolyte injection hole 2115 for injecting an electrolyte into the interior of the housing 21, the electrolyte injection hole 2115 and the groove 2112 are arranged along a first direction Y, and the first direction Y is perpendicular to the thickness direction X of the wall portion. Along the first direction Y, the groove 2112 has a first end 2112a farthest from the electrolyte injection hole 2115 and a second end 2112b closest to the electrolyte injection hole 2115, and a distance between the first ventilation groove 2114 and the first end 2112a is less than a distance between the first ventilation groove 2114 and the second end 2112b. One end of the first ventilation groove 2114 in its extension direction extends to the groove side surface of the groove 2112, and an area of a cross-section of the first ventilation groove 2114 is S₁, satisfying 0.1 mm² ≤ S₁ ≤ 1 mm², where the cross-section of the first ventilation groove 2114 is perpendicular to the extension direction of the first ventilation groove 2114.

According to some embodiments of the present application, as shown in FIG. 8 to FIG. 9, the present application provides a battery cell 20, where the battery cell 20 includes a housing 21, an electrode assembly 24, a pressure relief mechanism 22, and a first shielding member 23. The housing 21 has a wall portion 211, and the housing 21 includes a housing body 212 and an end cap 213. An accommodation cavity with an opening 2121 is formed in an interior of the housing body 212, the accommodation cavity is configured to accommodate the electrode assembly 24, the end cap 213 seals the opening 2121, and the end cap 213 is the wall portion 211. Along the thickness direction X of the wall portion, the wall portion 211 has a first surface 2111 facing away from the interior of the housing 21, the first surface 2111 is provided with a groove 2112, and the groove bottom surface of the groove 2112 is provided with a pressure relief hole 2113. The pressure relief hole 2113 includes a first hole segment 2113a and a second hole segment 2113b arranged along the thickness direction X of the wall portion, where the first hole segment 2113a is closer to the groove 2112 than the second hole segment 2113b, the hole diameter of the first hole segment 2113a is smaller than the hole diameter of the second hole segment 2113b, and the pressure relief mechanism 22 is disposed in the second hole segment 2113b and covers the first hole segment 2113a, where the pressure relief mechanism 22 is configured to release the internal pressure of the battery cell 20. The groove bottom surface of the groove 2112 is further provided with a first protrusion 2116 protruding therefrom, the first protrusion 2116 is arranged around the pressure relief hole 2113, and an annular groove 2117 is formed between the first protrusion 2116 and the groove side surface of the groove 2112. Along the thickness direction X of the wall portion, the first protrusion 2116 is spaced apart from the first shielding member 23, and the inner peripheral surface of the first protrusion 2116 is connected to and flush with the wall surface of the first hole segment. A second protrusion 2118 is formed on a side of the wall portion 211 facing away from the first surface 2111 and at a position corresponding to the groove 2112. The first shielding member 23 is connected to the first surface 2111 and covers the groove 2112, and the first shielding member 23 is provided with a first exhaust passage 27, where the first exhaust passage 27 communicates the annular groove 2117 with the exterior of the housing 21. The first exhaust passage 27 is a first through-hole 231 provided on the first shielding member 23, and along the thickness direction X of the wall portion, the first protrusion 2116 is spaced apart from the first shielding member 23, and the projection of the first through-hole 231 is located within the annular groove 2117. An area of a cross-section of the first through-hole 231 is S₂, satisfying 0.1 mm² ≤ S₂ ≤ 1 mm².

According to some embodiments of the present application, as shown in FIG. 10 to FIG. 11, the present application provides a battery cell 20, where the battery cell 20 includes a housing 21, an electrode assembly 24, a pressure relief mechanism 22, a first shielding member 23, and a second shielding member 28. The housing 21 has a wall portion 211, and the housing 21 includes a housing body 212 and an end cap 213. An accommodation cavity with an opening 2121 is formed in an interior of the housing body 212, the accommodation cavity is configured to accommodate the electrode assembly 24, the end cap 213 seals the opening 2121, and the end cap 213 is the wall portion 211. Along the thickness direction X of the wall portion, the wall portion 211 has a first surface 2111 facing away from the interior of the housing 21, the first surface 2111 is provided with a groove 2112, and the groove bottom surface of the groove 2112 is provided with a pressure relief hole 2113. The pressure relief hole 2113 includes a first hole segment 2113a and a second hole segment 2113b arranged along the thickness direction X of the wall portion, where the first hole segment 2113a is closer to the groove 2112 than the second hole segment 2113b, the hole diameter of the first hole segment 2113a is smaller than the hole diameter of the second hole segment 2113b, and the pressure relief mechanism 22 is disposed in the second hole segment 2113b and covers the first hole segment 2113a, where the pressure relief mechanism 22 is configured to release the internal pressure of the battery cell 20. The groove bottom surface of the groove 2112 is further provided with a first protrusion 2116 protruding therefrom, the first protrusion 2116 is arranged around the pressure relief hole 2113, and an annular groove 2117 is formed between the first protrusion 2116 and the groove side surface of the groove 2112. Along the thickness direction X of the wall portion, the first protrusion 2116 does not extend beyond the first surface 2111, and the inner peripheral surface of the first protrusion 2116 is connected to and flush with the wall surface of the first hole segment. A second protrusion 2118 is formed on a side of the wall portion 211 facing away from the first surface 2111 and at a position corresponding to the groove 2112. The first shielding member 23 is connected to the first surface 2111 and covers the groove 2112, and the first shielding member 23 is provided with a first exhaust passage 27, where the first exhaust passage 27 communicates the groove 2112 with the exterior of the housing 21, and the first exhaust passage 27 is a first through-hole 231 provided on the first shielding member 23, where the projection of the first through-hole 231 in the thickness direction X of the wall portion is located within the groove 2112. The second shielding member 28 is connected to an end of the first protrusion 2116 facing the first shielding member 23 in the thickness direction X of the wall portion, the second shielding member 28 covers the pressure relief hole 2113, and a projection of an edge of the second shielding member 28 in the thickness direction X of the wall portion is located within the annular groove 2117. Along the thickness direction X of the wall portion, the first shielding member 23 is spaced apart from the second shielding member 28, the first protrusion 2116 is provided with a second exhaust passage 29, and the second exhaust passage 29 communicates the pressure relief hole 2113 with the first exhaust passage 27. The second exhaust passage 29 is a second ventilation groove 2116a provided on the end surface of the first protrusion 2116 facing the first shielding member 23, and along the radial direction of the pressure relief hole 2113, the second ventilation groove 2116a extends through two sides of the first protrusion 2116.

It should be noted that, in the absence of conflict, the embodiments and features in the embodiments of the present application may be combined with each other.

The above are merely preferred embodiments of the present application and are not intended to limit the present application. For those skilled in the art, the present application may have various modifications and variations. Any modifications, equivalent substitutions, improvements, or the like, made within the spirit and principles of the present application shall be included within the scope of protection of the present application.

## Claims

1. A battery cell, comprising:
a housing having a wall portion, wherein along a thickness direction of the wall portion, the wall portion has a first surface facing away from an interior of the housing, the first surface is provided with a groove, and a groove bottom surface of the groove is provided with a pressure relief hole;
a pressure relief mechanism disposed in the pressure relief hole, wherein the pressure relief mechanism is configured to release an internal pressure of the battery cell; and
a first shielding member connected to the first surface and covering the groove.

2. The battery cell according to claim 1, wherein the first shielding member or the wall portion is provided with a first exhaust passage, and the first exhaust passage communicates the groove with an exterior of the housing.

3. The battery cell according to claim 2, wherein the first exhaust passage is a first ventilation groove provided on the first surface, the first ventilation groove extends to a groove side surface of the groove, and along the thickness direction of the wall portion, the first shielding member covers only a portion of the first ventilation groove.

4. The battery cell according to claim 3, wherein the first surface is provided with an electrolyte injection hole for injecting an electrolyte into the interior of the housing, the electrolyte injection hole and the groove are arranged along a first direction, and the first direction is perpendicular to the thickness direction of the wall portion;
wherein along the first direction, the groove has a first end farthest from the electrolyte injection hole and a second end closest to the electrolyte injection hole, and a distance between the first ventilation groove and the first end is less than a distance between the first ventilation groove and the second end.

5. The battery cell according to claim 3 or 4, wherein an end of the first ventilation groove in its extension direction extends to the groove side surface of the groove, and an area of a cross-section of the first ventilation groove is S₁, satisfying S₁ ≤ 10 mm², wherein the cross-section of the first ventilation groove is perpendicular to the extension direction of the first ventilation groove.

6. The battery cell according to claim 5, wherein 0.1 mm² ≤ S₁ ≤ 1 mm².

7. The battery cell according to any one of claims 3 to 6, wherein the groove bottom surface of the groove is provided with a first protrusion protruding therefrom, the first protrusion is arranged around the pressure relief hole, and an annular groove is formed between the first protrusion and the groove side surface of the groove;
wherein the first ventilation groove communicates the annular groove with the exterior of the housing, and along the thickness direction of the wall portion, the first protrusion is spaced apart from the first shielding member.

8. The battery cell according to claim 2, wherein the first exhaust passage is a first through-hole provided on the first shielding member, and along the thickness direction of the wall portion, a projection of the first through-hole is located within the groove.

9. The battery cell according to claim 8, wherein along the thickness direction of the wall portion, the projection of the first through-hole does not overlap with a projection of the pressure relief hole.

10. The battery cell according to claim 9, wherein the groove bottom surface of the groove is provided with a first protrusion protruding therefrom, the first protrusion is arranged around the pressure relief hole, and an annular groove is formed between the first protrusion and the groove side surface of the groove;
wherein along the thickness direction of the wall portion, the first protrusion is spaced apart from the first shielding member, and the projection of the first through-hole is located within the annular groove.

11. The battery cell according to any one of claims 8 to 10, wherein an area of a cross-section of the first through-hole is S₂, satisfying S₂ ≤ 10 mm².

12. The battery cell according to claim 11, wherein 0.1 mm² ≤ S₂ ≤ 1 mm².

13. The battery cell according to any one of claims 1 to 12, wherein the groove bottom surface of the groove is provided with a first protrusion protruding therefrom, the first protrusion is arranged around the pressure relief hole, and an annular groove is formed between the first protrusion and the groove side surface of the groove.

14. The battery cell according to claim 13, wherein the battery cell further comprises:
a second shielding member, wherein along the thickness direction of the wall portion, the second shielding member is connected to the first protrusion, and the second shielding member covers the pressure relief hole.

15. The battery cell according to claim 14, wherein along the thickness direction of the wall portion, the second shielding member is connected to an end of the first protrusion facing away from the groove bottom surface of the groove.

16. The battery cell according to claim 15, wherein along the thickness direction of the wall portion, the first shielding member is spaced apart from the second shielding member;
wherein the first shielding member or the wall portion is provided with a first exhaust passage, the second shielding member or the first protrusion is provided with a second exhaust passage, the first exhaust passage communicates the second exhaust passage with the exterior of the housing, and the second exhaust passage communicates the first exhaust passage with the pressure relief hole.

17. The battery cell according to claim 16, wherein along the thickness direction of the wall portion, a distance between the first shielding member and the second shielding member is D₁, and a thickness of the second shielding member is D₂, satisfying D₂ ≤ D₁ ≤ 8 D₂.

18. The battery cell according to claim 16 or 17, wherein along the thickness direction of the wall portion, a distance between the first shielding member and the second shielding member is D₁, satisfying 0.1 mm ≤ D₁ ≤ 1 mm.

19. The battery cell according to any one of claims 16 to 18, wherein the second exhaust passage is a second ventilation groove provided on the first protrusion, and along a radial direction of the pressure relief hole, the second ventilation groove extends through two sides of the first protrusion; or
the second exhaust passage is a second through-hole provided on the second shielding member, and a projection of the second through-hole in the thickness direction of the wall portion is located within the pressure relief hole.

20. The battery cell according to any one of claims 16 to 18, wherein the first exhaust passage is a first through-hole provided on the first shielding member, and the second exhaust passage is a second through-hole provided on the second shielding member; and along the thickness direction of the wall portion, a projection of the first through-hole is located within the groove, a projection of the second through-hole is located within the pressure relief hole, and the projection of the first through-hole and the projection of the second through-hole do not overlap.

21. The battery cell according to any one of claims 15 to 20, wherein a projection of an edge of the second shielding member in the thickness direction of the wall portion is located within the annular groove.

22. The battery cell according to any one of claims 13 to 21, wherein along the thickness direction of the wall portion, the first protrusion does not extend beyond the first surface.

23. The battery cell according to any one of claims 13 to 22, wherein along the thickness direction of the wall portion, the pressure relief hole comprises a first hole segment closest to the groove, and a wall surface of the first hole segment is connected to and flush with an inner peripheral surface of the first protrusion.

24. The battery cell according to claim 23, wherein the pressure relief hole further comprises a second hole segment, and along the thickness direction of the wall portion, the second hole segment is located on a side of the first hole segment facing away from the groove;
wherein a hole diameter of the first hole segment is smaller than a hole diameter of the second hole segment, and the pressure relief mechanism is disposed in the second hole segment and covers the first hole segment; or
the hole diameter of the first hole segment is larger than the hole diameter of the second hole segment, and the pressure relief mechanism is disposed in the first hole segment and covers the second hole segment.

25. The battery cell according to any one of claims 1 to 24, wherein along the thickness direction of the wall portion, a second protrusion is formed on a side of the wall portion facing away from the first surface and at a position corresponding to the groove.

26. The battery cell according to any one of claims 1 to 25, wherein the housing comprises:
a housing body, whose interior is formed with an accommodation cavity with an opening, and the accommodation cavity is configured to accommodate an electrode assembly; and
an end cap sealing the opening;
wherein the end cap is the wall portion; or
the housing body comprises the wall portion.

27. A battery comprising the battery cell according to any one of claims 1 to 26.

28. An electric apparatus comprising the battery cell according to any one of claims 1 to 26, wherein the battery cell is configured to provide electric energy.
